# EUROPÄISCHE PATENTSCHRIFT

(11) **EP 0 600 057 B1**
(45) Veröffentlichungstag und Bekanntmachung des Hinweises auf die Patenterteilung: **02.09.1998**
(21) Anmeldenummer: 93912529.0
(22) Anmeldetag: 21.06.1993
(51) Int. Cl.: B65G 1/06, B65G 35/04

(54) **PALETTENTRAGSCHIENE SOWIE EINSCHUBREGAL MIT PALETTENTRAGSCHIENEN UND TRANSPORTBAHN**
PALLET-SUPPORT RAIL AND SLIDE-IN PALLET-STORAGE UNIT WITH PALLET-SUPPORT RAILS AND PALLET-CONVEYOR TRACK
RAIL PORTEUR POUR PALETTES ET RAYONS DE CHARGEMENT COMPORTANT DES RAILS PORTEURS POUR PALETTES ET PISTE DE TRANSPORT

(30) Priorität: 22.06.1992 CH 1960/92
(43) Veröffentlichungstag der Anmeldung: 08.06.1994
(73) Patentinhaber: SLIDE IN SA, CH-6900 Lugano (CH)
(72) Erfinder: HALDIMANN, Hans, Rudolf, CH-6900 Lugano (CH)
(74) Vertreter: Hug Interlizenz AG
(86) Internationale Anmeldenummer: CH9300159
(87) Internationale Veröffentlichungsnummer: WO9400370

(56) Entgegenhaltungen:
- CH-A- 526 441
- FR-A- 1 362 524
- FR-A- 2 357 444
- GB-A- 1 276 584
- US-A- 2 806 631

## Beschreibung

### TECHNISCHES GEBIET

Die vorliegende Erfindung bezieht sich auf das Gebiet der Lager- bzw. Transporttechnik. Sie betrifft eine Palettentragschiene zur Förderung von Paletten und Behältern gemäss dem Oberbegriff des Anspruchs 1 bzw. 38.

Die Erfindung betrifft weiterhin ein Einschubregal zum Lagern von Paletten und vergleichbaren Behältern, welches Einschubregal eine Mehrzahl von neben- und/oder übereinander angeordneten Regalkanälen zum sukzessiven Ein- und Auslagern einer Mehrzahl von Paletten und Behältern von einer Regalseite aus umfasst.

Die Erfindung betrifft auch eine Transportbahn zum Fördern von Paletten und vergleichbaren Behältern.

Eine solche Palettentragschiene ist z.B. aus der Druckschrift CH-A-526 441 bekannt.

### STAND DER TECHNIK

In der Lagertechnik für Paletten oder vergleichbare Behälter besteht ein Bedürfnis nach einer Förderbahn für Paletten, vorzugsweise Holzpaletten, welche der horizontalen Bewegung der Palette einen sehr geringen Widerstand entgegensetzt, und zwar besonders auch im Moment des Anfahrens. Diese Förderbahn, sollte eine möglichst geringe Bauhöhe aufweisen, damit sie in Palettenregale eingebaut werden kann. Diese Bauhöhe sollte deutlich geringer sein als die Höhe der üblichen Holzpaletten (< 50 %), aber nicht durch einen zu kleinen Rollendurchmesser erreicht werden. Damit diese Förderbahnen sinnvoll in Regale eingebaut werden können, darf diese Bauhöhe nirgends überschritten werden, auch nicht an den Enden der Bahn bei den Umlenkungen der Ketten.

Eine Sorte von bisher verwendeten Förderbahnen für Paletten benutzt aneinandergereihte Rollen, auf welchen die Bodenfläche der Palette abrollt. Da diese Bodenflächen sehr unregelmässig und oft beschädigt sind, entstehen hohe und schwer berechenbare Rollwiderstände, welche es z.B. nicht erlauben, mit dem erwünschten geringen Gefällen einer Bahn einen zuverlässigen Selbstanlauf zu gewährleisten. Die Bahnneigung muss auch für die schlechtesten Verhältnisse genügend Vortriebskraft aufbringen und muss daher sehr gross gewählt werden. Ist dann aber zufälligerweise der Rollwiderstand gering, so führt der aus der grossen Neigung resultierende Ueberschuss an Vortriebskraft zu gefährlichen Beschleunigungen und damit zu unzulässigen Paletten-Geschwindigkeiten. Aufwendige Brems-systeme sind daher bei dieser Technik unvermeidlich. In analoger Weise entstehen gefährliche Verhältnisse, wenn man Paletten auf einer Förderbahn gegen eine grosse Bahnsteigung in ein Regal einschieben will, nämlich bei der Benutzung der Lagertechnik des sogenannten Einschubregales, die immer mehr verwendet wird.

Es sind daher bereits verschiedene Vorschläge gemacht worden, um die beschriebenen Risiken zu mindern: Der beschriebene Uebelstand kann beispielsweise grundsätzlich beseitigt werden, wenn der direkte, unzuverlässige Kontakt zwischen Palettenunterseite und Rollen eliminiert wird durch Zwischenelemente, auf denen die Palette ohne Relativbewegung aufsitzt, die dann ihrerseits mit mechanisch einwandfrei ausgebildeten unterseitigen Flächen auf den Rollen laufen.

Das bis jetzt am meisten benutzte Zwischenelement, nämlich eine Hilfspalette mit bester Qualität der Unterseite, welche die Förderanlage nicht verlässt, ist mit dem Nachteil behaftet, dass sie zusätzlichen Raum verbraucht und umständlich unter die eigentlichen Lastpaletten gesetzt werden muss.

Weiterhin sind katalogmässige und international genormte Transportketten für den beschriebenen Zweck nicht sinnvoll. Derartige Transportketten sind für unnötig hohe Zugkräfte ausgelegt, haben aber einen so hohen Widerstand gegen eine Horizontalverschiebung, dass sie motorisch angetrieben werden müssen, und eine Realisierung der gewünschten Schwerkraftantriebe mit ihnen unmöglich ist. Darüber hinaus ist der Abstand zwischen Ober- und Untertrum bei solchen Ketten konstruktionsbedingt sehr gross, was zu einem unerträglichen zusätzlichen Raumverlust im Regal führen würde.

Es wurden aber auch bereits Tragrollen in diese Ketten eingebaut, die dann unter der Bezeichnung "Stauförderketten" auf dem Markt sind. Diese Ketten sind sehr schwer und erzeugen Bauhöhen, die den Einbau in ein Regal verunmöglichen. Sie werden im übrigen für angetriebene Transportstrecken verwendet.

Weiterhin wurde auch schon versucht, leichte Rollenketten mit geraden Laschen über die üblichen Rollenschienen mit Leinen Rollen laufen zu lassen. Das hat sich als aufwendig und gleichwohl unsicher erwiesen, weil die Rollen sehr eng gesetzt sein müssen, wobei die Kettenspannung hoch sein muss und der Selbstanlauf nicht gewährleistet ist.

Schliesslich ist auch vorgeschlagen worden, die Tragrollen in die Kette einzubauen und diese Rollen auf einer glatten Lauffläche rollen lassen, wobei Tragrollen, Kette, Lauffläche und entsprechende Umlenkvorrichtungen zusammen eine Palettentragschiene bilden. Eine solche Lösung ist z.B. in dem eingangs genannten US-Patent Nr. 4,662,511 beschrieben, welches wohl den bisher erreichten Stand der Technik auf diesem Gebiet darstellt.

Diese bekannte Lösung hat jedoch einen wichtigen Nachteil: Die Kette läuft als Endloskette um zwei als Zahnräder ausgebildete Umlenkräder und wird ausschliesslich durch die Umlenkräder seitlich geführt, wobei durch die geringe Breite der Umlenkräder im Vergleich zu der Länge der Tragrollen ein sehr grosses Spiel gegeben ist. Wegen dieser Art der Kettenführung muss die Kettenlänge bzw. die Länge einer Palettentragschiene auf kleine Werte beschränkt werden, weil andernfalls die Kette im Mittelbereich zwischen den Umlenkrollen leicht von ihrer Laufbahn abgleiten könnte. Es ist daher mit dieser Technik nicht möglich, eine über mehrere hintereinander angeordnete Palettenplätze reichende, einstückige Palettentragschiene mit durchgehender Kette zu realisieren. Vielmehr ist bei der vorgeschlagenen Lösung pro Palettenplatz ein eigenes, autonomes Tragschienenpaar vorgesehen. Dies hat zur Folge, dass bei einem mit diesen Schienen ausgerüsteten Einschubregal beim Ein- und Auslagern der Paletten dieselben nicht gleichförmig miteinander bewegt werden können, sondern ihre Bewegung untereinander durch gegenseitige Stösse übertragen müssen, sobald sie von einem zum nächsten Palettenplatz wechseln. Dies kann nicht nur zu Beschädigungen des auf den Paletten gestapelten Gutes führen, sondern hat insgesamt eine sehr ungleichförmige Ein- und Auslagerbewegung zur Folge, die das Bedienen des Regals erheblich erschweren kann.

Darüber hinaus beansprucht das vorgeschlagene System sehr viel Bauhöhe, nämlich ca. 7,5 mal den Rollendurchmesser. Trotz der Wahl eines technisch an der untersten Grenze liegenden Rollendurchmessers ist die Palettentragschiene gleich hoch wie die darauf transportierten Paletten.

In der CH-A-526 441 ist ein Durchlaufregal offenbart, bei dem gemäss Fig. 4 und 5 eine Rollbahn für Paletten mit einem zentralen Förderorgan kombiniert ist. Das Förderorgan umfasst eine Gelenkkette bekannter Bauart, deren Rollen auf einem Längssteg laufen, wobei die die Rollen verbindenden seitlichen Laschen die Führung übernehmen. An jeder zweiten Lasche ist ein kurzes Trägerelement in Form eines Winkelprofilstabes angebracht. Die horizontalen Schenkel von einander gegenüberliegenden Trägerelementen bilden zusammen eine Auflage für einen elastisch deformierbaren kissenförmigen Mitnehmer, der mit der Unterseite der Palette in Reibschluss steht. Eine Rückführung der Kette innerhalb der Rollbahn ist hier nicht vorgesehen und muss daher ausserhalb erfolgen, so dass diese Lösung erheblichen zusätzlichen Raum beansprucht und sich beispielsweise nicht für einen nachträglichen Einbau in bestehende Regalsysteme eignet.

### DARSTELLUNG DER ERFINDUNG

Es ist nun Aufgabe der Erfindung, eine Palettentragschiene sowie ein zugehöriges Einschubregal und eine Transportbahn anzugeben, welche die aufgeführten Nachteile vermeiden und insbesondere einen leichten und stossfreien Lauf der Paletten über eine grössere Länge gewährleisten, sowie einen kompakten Aufbau mit geringem Platzbedarf ermöglichen.

Die Aufgabe wird bei einer Palettentragschiene der eingangs genannten Art durch die Merkmale aus dem kennzeichnenden Teil des Anspruchs 1 bzw. 38 gelöst.

Für die Palettentragkette ist eine reibungsarme und platzsparende seitliche Führung über die gesamte tragende Kettenlänge vorzusehen, welche direkt mit den Tragrollen selbst verknüpft ist. Hierdurch ist es möglich, mehrere Paletten bzw. alle Paletten eines Regalkanals auf einer einzigen Palettentragkette zu transportieren, was eine stossfreie, gleichmässige Bewegung ermöglicht.

Mit der Aufteilung in Ober- und Untertrum Lässt sich ein kompakter und platzsparender Aufbau beigleichzeitig Leichtem Lauf der Kette und Optimalem Schutz vor Verschmutzung erzielen.

Eine erste bevorzugte Ausführungsform der Palettentragschiene nach der Erfindung zeichnet sich dadurch aus, dass
(a) die Laufschiene in ihrer Breite kleiner gewählt ist als der Abstand der beiden Seitenlaschen eines Paares; und
(b) die Seitenlaschen soweit nach unten vorstehen, dass sie seitliche Kräfte seitlich von aussen an die Laufschiene übertragen und damit die Palettentragkette seitlich führen.

In diesem Fall wird die seitliche Führung besonders einfach realisiert, ohne dass an den Tragrollen selbst auwendige Veränderungen vorgenommen werden müssen.

Eine zweite bevorzugte Ausführungsform der Palettentragschiene nach der Erfindung zeichnet sich dadurch aus, dass die Tragrollen als Bordrollen ausgebildet sind und im Mittelbereich eine umlaufende Führungsnut aufweisen, und dass auf der Laufschiene eine erhabene Führungsschiene vorgesehen ist, welche jeweils in die Führungsnut hineinragt und die Tragrollen seitlich führt. Diese Ausführungsform ist von den Rollen her aufwendiger, ist jedoch hinsichtlich der Seitenlaschen und Lausfchienen- unbd Rollenbreite flexibler.

Eine dritte bevorzugte Ausführungsform der Palettentragschiene nach der Erfindung zeichnet sich dadurch aus, dass
(a) die Tragrollen als Bordrollen ausgebildet sind und an den Rändern umlaufende Rollenborde aufweisen;
(b) die Laufschiene in ihrer Breite kleiner gewählt ist als der Abstand der beiden Rollenborde; und
(c) die Rollenborde soweit nach unten vorstehen, dass sie seitliche Kräfte seitlich von aussen an die Laufschiene übertragen und damit die Palettentragkette seitlich führen.

In diesem Fall ist die seitliche Führung ähnlich wie bei der zweiten Ausführungsform, kann jedoch niederiger gehalten werden, weil die erhabene Führungsschiene entfällt.

Eine andere bevorzugte Ausführungsform der Palettentragschiene nach der Erfindung zeichnet sich dadurch aus, dass die Tragrollen auf den Kettenbolzen mittels eines Wälzlagers gelagert sind. Hierdurch wird die Rollreibung minimiert und ein ausserordentlich leichter Selbstanlauf selbst bei geringen Steigungen der Laufschiene erreicht.

Eine weitere bevorzugte Ausführungsform zeichnet sich dadurch aus, dass die Gesamthöhe der Palettentragschiene mit dem Obertrum und dem Untertrum den dreifachen Durchmesser der Tragrollen und/oder die halbe Höhe einer genormten Europalette nicht oder nicht wesentlich übersteigt, dass die Kettenumlenkvorrichtung so ausgebildet ist, dass die Gesamthöhe auch im Umlenkbereich eingehalten wird, dass die Kettenumlenkvorrichtung ein Umlenkelement mit einer elastisch gelagerten Stützkurve umfasst, auf welcher Stützkurve die Tragrollen der Palettentragkette bei der Umlenkung ablaufen, und dass das Umlenkelement mit der elastisch gelagerten Stützkurve als gummigelagerte Buchse mit einem Innenring, einem gummielastischen Zwischenring und einem Aussenring ausgebildet ist.

Hierdurch lässt sich eine minimale Bauhöhe der gesamten Palettentragschiene erreichen, wobei gleichzeitig unter Vermeidung des Polygon-Effektes ein ruhiger Lauf bei der Umlenkung der Kette gewährleistet ist.

Bei einer anderen bevorzugten Ausführungsform der erfindungsgemässen Palettentragschiene ist die Laufschiene seitlich von einer tieferliegenden Stützfläche umgeben, und die führenden Seitenlaschen stehen so weit nach unten vor, dass sie von der Stützfläche nur einen geringen Abstand haben und sich bei einem Kippen der Palettentragkette auf der Stützfläche aufstützen. Mit dieser Massnahme kann ein störungsfreier Betrieb der Schiene auch unter erschwerten Bedingungen garantiert werden, weil die Verkippung der Kette auf ein Minimum begrenzt ist.

Eine weitere bevorzugte Ausführungsform der Erfindung ist dadurch gekennzeichnet, dass Ober- und Untertrum zusammen ein umlaufendes Trum bilden, welches am anderen Ende der Palettentragschiene über eine hintere Umlenkvorrichtung umgelenkt wird, und dass nur etwa die halbe Länge des umlaufenden Trums als Palettentragkette ausgebildet ist, während die andere Hälfte des Trums aus Zugmitteln besteht, welche die Enden der Palettentragkette zur Uebertragung von Zugkräften miteinander verbinden. Hierdurch können bei der Kette Gewicht und Kosten gespart und die Beweglichkeit erhöht werden.

Das erfindungsgemässe Einschubregal zum Lagern von Paletten und Behältern, welches Einschubregal eine Mehrzahl von neben-und/oder übereinander angeordneten Regalkanälen mit mehreren hintereinander angeordneten Palettenplätzen zum sukzessiven Ein- und Auslagern einer Mehrzahl von Paletten und Behältern von einer Regalseite aus umfasst, ist dadurch gekennzeichnet, dass zum Fördern der Paletten bzw. Behälter in jedem der Regalkanäle wenigstens zwei parallel angeordnete Palettentragschienen mit entsprechenden Palettentragketten nach einem der Ansprüche 1 bis 25 vorgesehen sind, und dass sich die Palettentragschienen jeweils einstückig über mehrere Palettenplätze, vorzugsweise über die gesamte Länge des Regalkanals erstrecken. Das erfindungsgemässe Einschubregal hat den besonderen Vorteil, dass jede Palette über lange Phasen des Ein-und Auslagerungsprozesses bzw. über den gesamten Ein- und Auslagerungsprozess relativ zur Kette einen fixen Platz einnimmt, so dass sich viele bzw. alle Paletten mit der Kette synchron und gleichmässig bewegen.

Gemäss einer ersten bevorzugten Ausführungsform des erfindungsgemässen Einschubregals sind Mittel vorhanden, um einen Gleichlauf der Palettentragketten in jedem Regalkanal sicherzustellen. Hierdurch wird ausgeschlossen, dass es durch eine Relativbewegung der Ketten zu einem Verdrehen der Paletten und damit zu einer Störung des Lagerbetriebs kommt.

Zur Vereinfachung des Lagerbetriebs ist es weiterhin von Vorteil, wenn gemäss einer zweiten bevorzugten Ausführungsform des erfindungsgemässen Einschubregals an zumindestens einer Palettentragschiene jedes Regalkanals Mittel zur Erkennung der Stellung der jeweiligen Palettentragkette vorgesehen sind. Auf diese Weise lässt sich ohne Schwierigkeiten vom Bedienpersonal erkennen, inwieweit ein einzelner Regalkanal gefüllt ist.

Die erfindungsgemässe Transportbahn zum Fördern von Paletten und vergleichbaren Behältern ist dadurch gekennzeichnet, dass die Transportbahn wenigstens zwei parallel angeordnete Palettentragschienen mit entsprechenden Palettentragketten nach einem der Ansprüche 1 bis 25 aufweist.

Weitere Ausführungsformen der Palettentragschiene und des Einschubregals nach der Erfindung ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Figuren näher erläutert werden. Es zeigen
- Fig. 1: im Querschnitt ein bevorzugtes Ausführungsbeispiel für eine Palettentragschiene nach der Erfindung, wobei ein Kettenglied aus dem Obertrum entlang der Linie A-A aus Fig. 2 geschnitten ist, während ein Kettenglied aus dem Untertrum in der Sicht entlang der Kettenrichtung dargestellt ist;
- Fig. 2: die Seitenansicht eines Kettenabschnitts aus dem Obertrum einer Palettentragschiene nach Fig. 1;
- Fig. 3: in Seitenansicht ein erstes Ausführungsbeispiel für eine Kettenumlenkvorrichtung mit einem mit Zähnen ausgestatteten Umlenkrad während zweier Phasen der Umlenkung (a und b);
- Fig. 4: in Seitenansicht ein zweites Ausführungsbeispiel für eine Kettenumlenkvorrichtung mit einem Umlenkelement (23) mit fester Stützkurve;
- Fig. 5: in Seitenansicht ein drittes Ausführungsbeispiel für eine Kettenumlenkvorrichtung mit einem Umlenkelement (24) mit elastisch gelagerter Stützkurve;
- Fig. 6: in Seitenansicht ein Ausführungsbeispiel für ein Einschubregal nach der Erfindung;
- Fig. 7: eine zu Fig. 1 und 2 analoge Darstellung eines weiteren Ausführungsbeispiels einer erfindungsgemässen Kette mit vereinfachter Montage der Tragrollen im Querschnitt (a) und in der Seitenansicht (b);
- Fig. 8: eine schematische Seitenansicht eines bevorzugten Ausführungsbeispiels einer Palettentragschiene nach der Erfindung mit Rücklaufseil und Gummiseil;
- Fig. 9: verschiedene (a-c) Ausführungsbeispiele für Mittel zum Sicherstellen des Gleichlaufes der Palettentragschienen in den Regalkanälen eines Einschubregals nach Fig. 6;
- Fig. 10: ein bevorzugtes Ausführungsbeispiel für eine Bremsvorrichtung zum Abbremsen der Paletten auf einer Palettentragschiene nach der Erfindung mit einem Federelement (55) im normalen (Fig. 10a) und im eingedrückten (Fig. 10b) Zustand;
- Fig. 11: ein zu Fig. 1 vergleichbares Ausführungsbeispiel einer Palettentragschiene außerhalb der Erfindung mit seitlicher Führung der Tragrollen durch eine umlaufende Führungsnut und eine entsprechende Führungsschiene auf der Laufschiene; und
- Fig. 12: ein zu Fig. 11 vergleichbares Ausführungsbeispiel mit seitlicher Führung durch Rollenborde an den Tragrollen.

### WEGE ZUR AUSFÜHRUNG DER ERFINDUNG

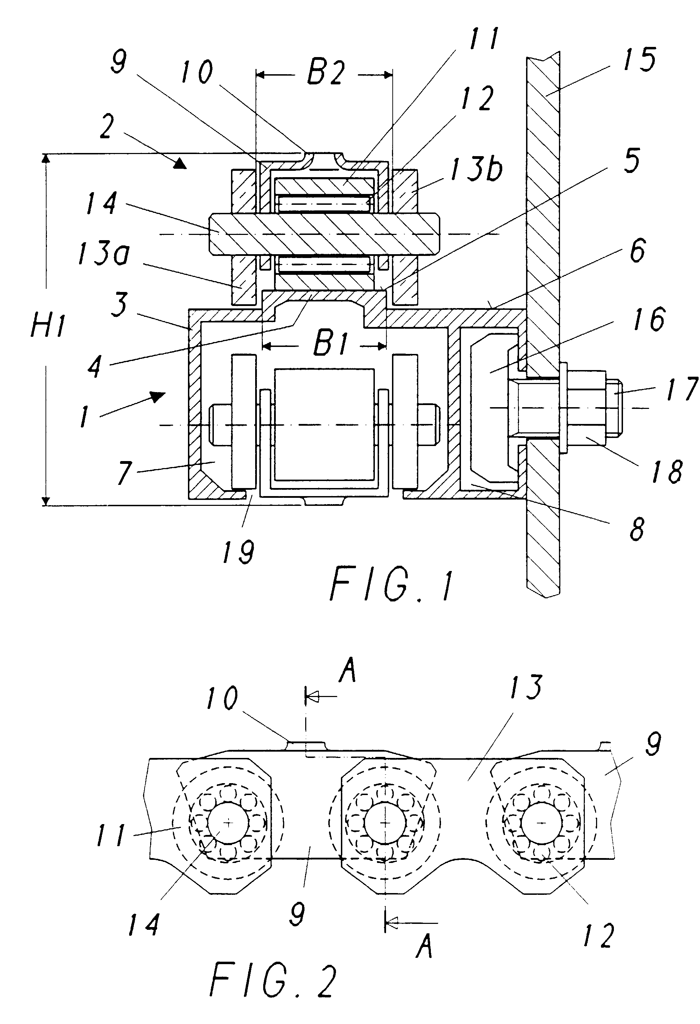

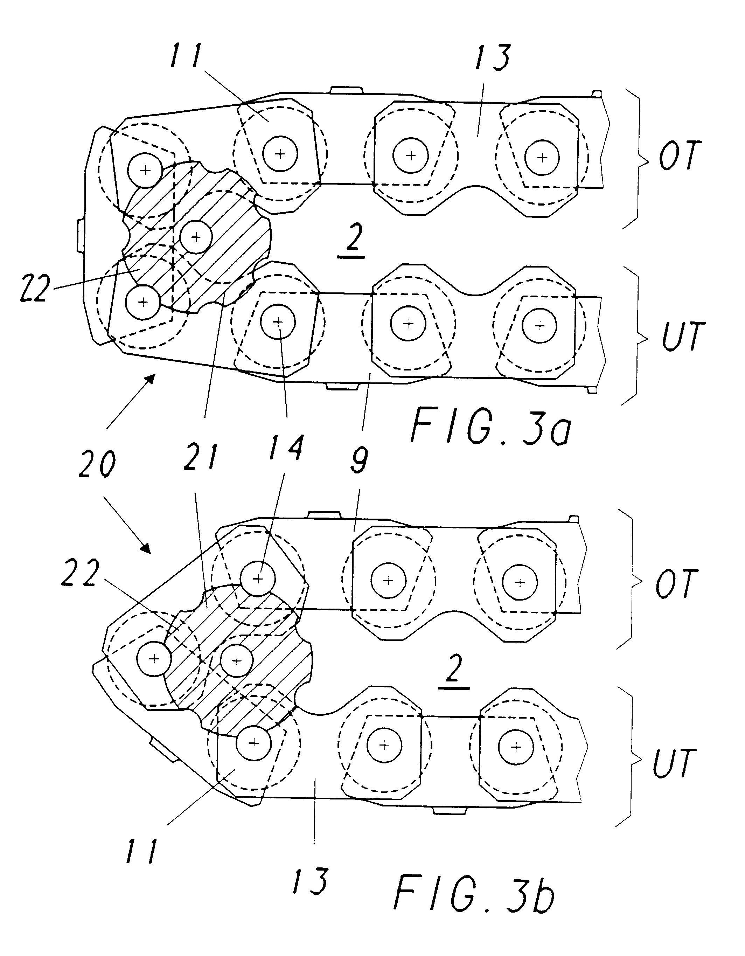

In den Fig. 1 und 2 ist ein bevorzugtes Ausführungsbeispiel für eine Palettentragschiene mit Palettentragkette nach der Erfindung dargestellt. Fig. 1 zeigt die Tragschiene im Querschnitt, wobei ein Kettenglied aus dem Obertrum (OT in Fig. 3 bis 5) entlang der Linie A-A aus Fig. 2 geschnitten ist, während ein Kettenglied aus dem Untertrum (UT in Fig. 3 bis 5) in der Seitenansicht entlang der Kettenrichtung dargestellt ist; Fig. 2 zeigt die Seitenansicht eines Kettenabschnitts aus dem Obertrum.

Die Palettentragschiene 1 umfasst im wesentlichen ein vorzugsweise aus stranggepresstem Aluminium bestehendes Tragprofil 3, welches einen rechteckigen Querschnitt aufweist und im unteren Bereich als weitgehend geschlossener Rücklaufkanal 7 ausgebildet ist. Zumindest an einer Seite des Tragprofils 3 (in Fig. 1 die rechte Seite) ist eine Befestigungsnut 8 angeformt, in welche zur Befestigung des Tragprofils 3 an einem Seitenteil 15 eines Regals Hammerkopfschrauben 16 mit ihrem Kopf eingeschoben und mit ihrem Schraubgewinde 17 durch entsprechende Bohrungen im Seitenteil 15 gesteckt und mittels Muttern 18 festgeschraubt werden können. Auf der Oberseite des Tragprofils 3 ist eine aus einer tieferliegenden Stützfläche 6 nach oben herausragende Laufschiene 4 ausgebildet, die auf ihrer Oberseite eine glatte Lauffläche 5 aufweist.

Das Tragprofil 3 nimmt eine Palettentragkette 2 auf, die durch eine (in Fig. 1 bzw. 2 nicht dargestellte) Umlenkung in ein Obertrum und Untertrum aufgeteilt wird. Das Obertrum läuft auf der Oberseite des Tragprofils 3, das Untertrum im Rücklaufkanal 7. Die Palettentragkette 2 ist als Rollenkette ausgebildet. Sie enthält eine Vielzahl von Tragrollen 11, die alternierend über Traglaschen 9 bzw. Paare von Seitenlaschen 13 bzw. 13a,b untereinander in Verbindung stehen.

Die glatten und bordlosen Tragrollen 11 sind auf festen Kettenbolzen 14 als Achsen mittels Tragrollenlagern 12 gelagert, welche vorzugsweise als Wälzlager ausgebildet sind. Sie erzeugen einen sehr niedrigen Umdrehungswiderstand, auch aus dem Stillstand. Sie rollen auf der glattgezogenen Lauffläche 5 der Laufschiene 4, und erzeugen dort einen ebenfalls sehr geringen Abrollwiderstand. Beide Reibwerte zusammen liegen im Promillebereich. Da die Lauffläche 5 eben, d.h., ohne Konkavität ausgebildet ist, kann sich auf ihr kein Schmutz sammeln.

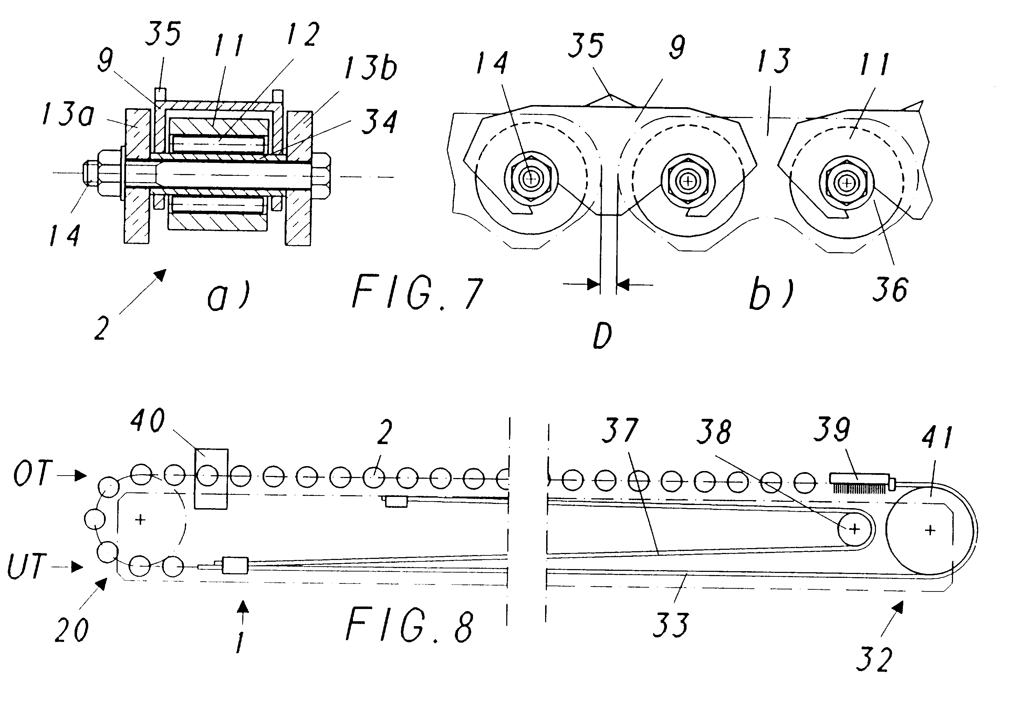

Die Kettenbolzen 14 gehen durch entsprechende Bohrungen in den Traglaschen 9 hindurch und sind in die Seitenlaschen 13a,b mit Pressitz fest eingepresst. Sie können seitlich aus den Seitenlaschen 13a,b herausstehen und als Mitnehmer verwendet werden. Die Kettenbolzen 14 drehen sich nur bei der (unbelasteten) Umlenkung in den Bohrungen der Traglaschen 9. Die Traglaschen 9 haben ein U-förmiges Profil und sind oben geschlossen, um eine Verschmutzung der Lauffläche 5 zu vermeiden. Sie können mit einer oder mehreren (eventuell gezackten) Rippe(n) 10 (oder Zacken 35 gemäss Fig. 7) versehen sein, die sich in das Holz der Paletten einkrallen, damit die auf der Palettentragkette 2 sitzenden Paletten unverrückbar in der Spur bleiben und sich auch nicht verdrehen.

Die Seitenlaschen 13a,b ragen über den Rollendurchmesser der Tragrollen 11 hinaus. Ihr Abstand B2 ist dabei etwas grösser als die Breite B1 der Laufschiene, so dass sie die Palettentragkette 2 seitlich an der erhöhten Laufschiene 4 führen. Die Seitenlaschen 13a,b sind gleichzeitig in ihrer Tiefe so bemessen, dass ihre Unterkanten von der Stützfläche 6 einen Abstand von nur einem Bruchteil eines Millimeters haben. Wenn daher die Kette äussere seitliche Kräfte erleiden würde, wäre die Verschiebung durch das Anliegen der Seitenlaschen 13a,b an das Bord der Laufschiene 4 begrenzt. Würde die Kette durch äussere Kräfte gekippt, so stützen sich die Unterkanten der Seitenlaschen 13a,b auf der Stützfläche 6 des Tragprofils 3 ab. Damit wird eine reibungsarme und lastunabhängige Seitenführung und eine Sicherung gegen das Wegkippen der Kette erreicht, insbesondere, wenn im Zusammenhang mit einem Tragprofil aus Aluminium die Seitenlaschen aus einem glatten Kunststoff wie z.B. PTFE gefertigt sind. An dieser Stelle sei angemerkt, dass es bei der Herstellung der Seitenlaschen aus einem reibungsarmen Kunststoff notwendig und vorteilhaft sein kann, eine laschenartige Einlage aus einem Metallblech oder dgl. vorzusehen, die selbst entsprechende Bohrungen für die Kettenbolzen aufweist und dann mit dem Kunststoff ummantelt ist. Auf diese Weise wird eine hohe Zugfestigkeit der Seitenlaschen bei gleichzeitig günstigen Reibungseigenschaften erreicht.

Im Rücklaufkanal 7, der nach unten hin eine schlitzförmige Oeffnung 19 aufweist, wird die Palettentragkette 2 so geführt, dass die Seitenlaschen 13a,b auf den Rändern der Oeffnung 19 aufliegen und dort reibungsarm gleiten können, während die Traglaschen 9 mit ihren Rippen 10 frei in der Oeffnung 19 hängen. Versuche haben dabei gezeigt, dass diese Eigenschaft der Reibungsarmut im Untertrum für die Leichtlaufeigenschaften der gesamten Palettentragschiene besonders wichtig ist.

Wie aus der Seitenansicht der Fig. 2 leicht zu erkennen ist, sind in der Palettentragkette 2 die Tragrollen 11 paarweise durch die Traglaschen 9 und die Seitenlaschen 13 verbunden. Traglaschen 9 und Seitenlaschen 13 sind dabei derart alternierend angeordnet, dass jeweils eine Traglasche 9 und ein benachbartes Paar von Seitenlaschen 13a,b eine Tragrolle 11 gemeinsam haben. Die Höhe der Kette wird massgeblich von den Tragrollen 11 und Seitenlaschen 13 bestimmt. Die Höhe H1 der gesamten Palettentragschiene 1 beträgt wegen der Umlenkung mindestens das zweifache der Kettenhöhe. Hinzu kommt ein notwendiger Mindestabstand von Ober- und Untertrum sowie die für die Seitenführung wesentliche Höhe der Laufschiene 4. Bei einem bewährten Ausführungsbeispiel der erfindungsgemässen Palettentragschiene ergab sich bei einer Rollenlast von 120 kg eine Gesamthöhe H1 von 88 mm, eine Kettenteilung von 38 mm und eine Breite der Tragrollen 11 von 25 mm. Bei diesen Abmessungen wird die übliche Höhe einer Tragschiene eines Einschubregales von etwa 87,5 mm praktisch nicht überschritten.

Um die Höhe H1 an der Umlenkung nicht zu erhöhen, wird diese bei der anmeldungsgemässen Palettentragschiene nach neuen Gesichtspunkten gestaltet. Insbesondere wird die Umlenkung so ausgebildet, dass die Höhe H1 den dreifachen Durchmesser der Tragrollen 11 und/oder die halbe Höhe einer genormten Europalette nicht oder nicht wesentlich übersteigt. In den Fig. 3 bis 5 sind in der Seitenansicht drei unterschiedliche Ausführungsbeispiele dargestellt, mit denen diese Ziele erreicht werden können.

Beim Ausführungsbeispiel der Fig. 3 sind als Kettenumlenkvorrichtung 20 für die in Obertrum OT und Untertrum UT aufgeteilte Palettentragkette 2 Umlenkräder 21 vorgesehen. Die Teilfiguren 3a und 3b zeigen zur besseren Veranschaulichung des Umlenkprozesses zwei unterschiedliche Phasen der Umlenkung. Die Umlenkräder 21 sind als mit Zähnen 22 ausgestattete 7-zähnige Zahnräder ausgebildet, deren Teilung derart vorgenommen ist, dass die Kettenlaschen jeweils einen Zahn überspringen (dies entspricht einem 3,5-zähnigen Rad). Die nach aussen überstehenden Kettenbolzen 14 wirken dabei als Mitnehmer für jeweils zwei vor der eigentlichen Tragschiene gelagerte Umlenkräder 21. Mit einer derartigen Kettenumlenkvorrichtung 20 ist eine einwandfreie Umlenkung möglich, ohne die durchgehende niedere Bauhöhe (H1) zu überschreiten. Mit einem 4-zähnigen Rad würde die Bauhöhe zu gross, mit einem 3-zähnigen wäre der Umlauf nicht mehr regelmässig.

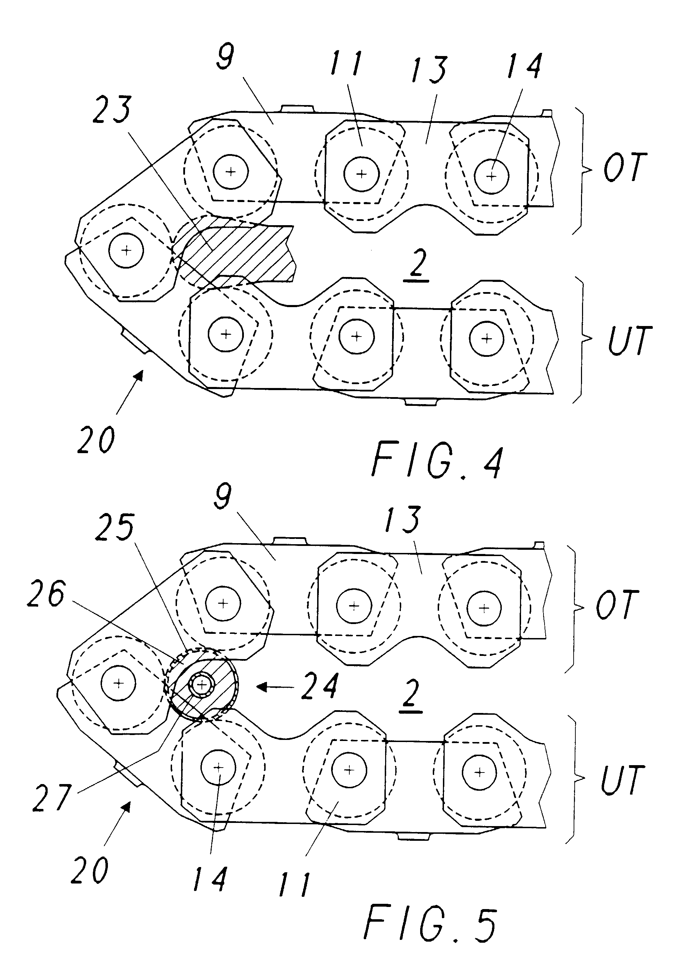

Beim Ausführungsbeispiel der Fig. 4 ist anstelle eines drehbar gelagerten Umlenkrades in der Kettenumlenkvorrichtung 20 ein drehfestes Umlenkelement 23 mit einer ortsfesten Stützkurve (Berandung) vor der eigentlichen Tragschiene befestigt (die Befestigung ist in Fig. 4 der Uebersichtlichkeit halber nicht dargestellt). Auf der Stützkurve des Umlenkelementes 23 rollen beim Umlenken die Tragrollen 11 der Kette ab. Die einzelnen Glieder der Kette bilden dabei am Umlenkpunkt ein Polygon, das zu einem ungleichmässigen Umlauf der Kette führt (Polygon-Effekt). Um dennoch eine möglichst gleichmässige Umlenkung zu gewährleisten, hat das Umlenkelement 23 im Querschnitt eine leichte Tropfenform. Im übrigen hat es sich bewährt, das Umlenkelement 23 ebenfalls aus einem PTFE herzustellen.

Als besonders geeignet für eine Eliminierung des Polygon-Effektes hat sich das in Fig. 5 wiedergegebene Ausführungsbeispiel für eine Kettenumlenkung herausgestellt: In diesem Beispiel ist vor der eigentlichen Tragschiene ein drehfestes Umlenkelement 24 mit einer elastisch gelagerten Stützkurve vorgesehen, die bei Eintreten des Verkürzungseffektes des Ketten-Polygons federnd eingedrückt wird und wieder nach aussen drückt, wenn die Verkürzung nachlässt. Vorzugsweise wird als Umlenkelement 24 eine gummigelagerte Buchse mit einem festen Innenring 27, einem gummielastischen Zwischenring 26 und einem festen Aussenring 25 eingesetzt, wie sie zur elastischen Lagerung von Maschinenteilen verwendet wird, und unter dem Namen "silent bloc" bekannt ist.

Bei der Verwendung von mehreren (insbesondere 2) Palettentragschienen für eine Transportbahn ist es für einen reibungslosen Betrieb notwendig bzw. vorteilhaft, die zugehörigen Palettentragketten untereinander in Gleichlauf zu halten. Zu diesem Zweck können die gezahnten Umlenkräder 21 der verschiedenen Schienen durch eine gemeinsame Achse miteinander kraftschlüssig verbunden werden.

Des weiteren können die seitlich herausstehenden Kettenbolzen 14 als Uebertragungselemente für Zahnräder verwendet werden, welche Obertrum OT und Untertrum UT zur Uebertragung der Bewegung miteinander verbinden. Alternativ ist es möglich, die Seitenlaschen 13a,b an ihrer Unterkante mit einer zahnstangenartigen Einprägung zu versehen (siehe Fig. 2 bis 5) und damit den Gleichlauf zwischen Ober- und Untertrum OT bzw. UT zu sichern und die Umlenkung in einer losen Schlaufe durchzuführen.

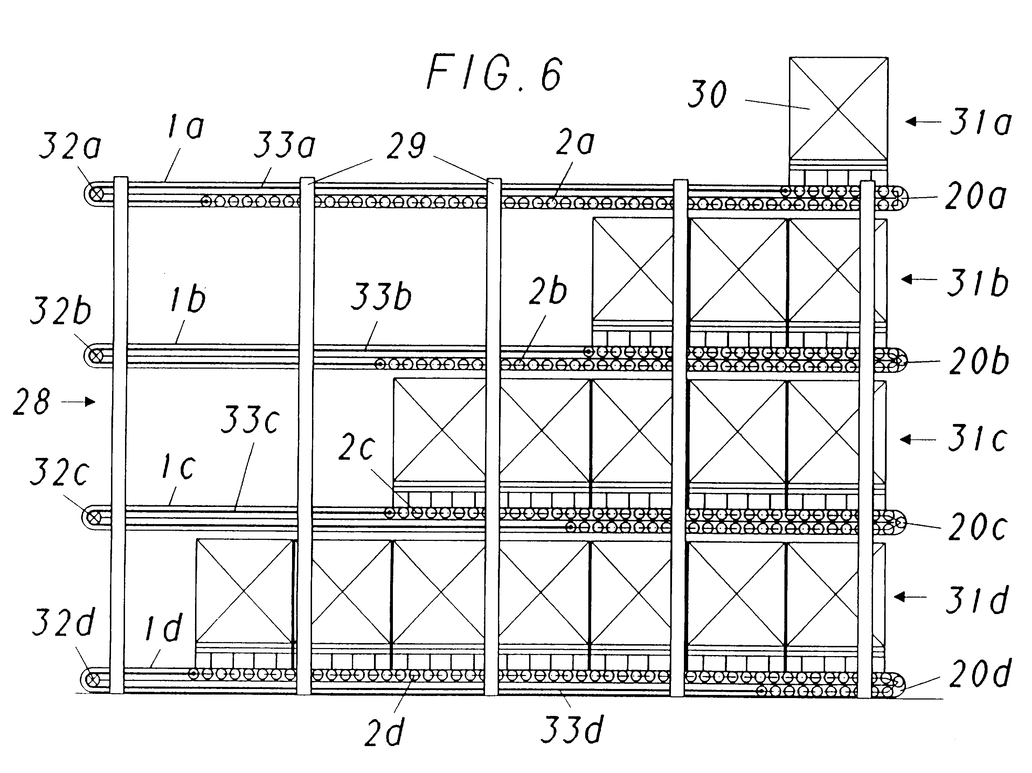

Eine oben beschriebene Palettentragschiene wird vorzugsweise dazu verwendet, um Paletten in einem sogenannten Einschubregal einzulagern. Ein solches Einschubregal 28 ist in Fig. 6 in der Seitenansicht dargestellt. Es ist aus vertikalen Regalstützen 29 aufgebaut, die durch (nicht dargestellte) Querund Längsträger untereinander verbunden sind. Es umfasst nebeneinander und übereinander eine Vielzahl von Regalkanälen 31a-d mit jeweils einer Mehrzahl von hintereinander angeordneten Palettenplätzen. Die Regalkanäle 31a-d sind jeweils mit Paaren von durchgehenden Palettentragschienen la-d ausgerüstet. Jede Palettentragschiene la-d enthält eine Palettentragkette 2a-d, die Teil eines durchgehenden, endlosen Trums ist, das jeweils über eine vordere Kettenumlenkvorrichtung 20a-d und eine hintere Umlenkvorrichtung 32a-d umgelenkt wird.

In einem solchen Regal werden mehrere Paletten 30 vom Bedienungsgang her (in der Darstellung der Fig. 6 von der rechten Seite her) gegen eine leichte Neigung auf den Palettentragschienen la-d in den Regalkanal 31a-d geschoben und dort von einem Anschlag gehalten. Wenn die vorderste Palette entnommen wird, laufen die dahinterstehenden zum Kanalende nach. Bei den kleinen und gut reproduzierbaren Reibwerten der erfindungsgemässen Palettentragschienen genügt eine sehr geringe und damit ungefährliche Neigung von weniger als 1 %, um das schwerkraftbedingte, selbsttätige Nachschieben zu gewährleisten.

Bei dem dargestellten Einschubregal 28 macht die Palettentragkette keinen vollen Umlauf, sondern es wird von der Kette lediglich einmal die volle Länge des Regalkanals 31a-d zum Tragen benutzt, während der Rest des umlaufenden Trums nichts tragen muss. Man kann daher jeden Kanal so ausrüsten, dass eine Hälfte des umlaufenden Trums aus der Palettentragkette 2a-d, und der andere Teil aus einem beliebigen, zur Uebertragung von Zugkräften geeigneten Band- oder Kettenmaterial, insbesondere einem Rücklaufseil 33a-d, besteht. Bei leerem Regalkanal befindet sich dann die Palettentragkette nur auf dem ersten Palettenplatz, während der Rest der Kanallänge durch das Rücklaufseil (oder ein entsprechendes Gurtband) belegt wird (siehe Regalkanal 31a mit Palettentragkette 2a und Rücklaufseil 33a in Fig. 6). Die hintere Umlenkvorrichtung 32a-d wird daher stets durch das Rücklaufseil 33a-d belegt, die vordere oder Kettenumlenkvorrichtung 20a-d immer durch die Palettentragkette 2a-d.

Zum Füllen wird auf den ersten Palettenplatz eines Regalkanals eine Palette aufgelegt. Dies geschieht noch ohne Bewegung der Kette. Mit der zweiten einzugebenden Palette wird die erste um eine Palettenlänge gegen die Neigung in den Regalkanal hinein verschoben und damit eine entsprechende Länge der Palettentragkette 2 aus dem unteren Rücklaufkanal 7 des Tragprofils 3 auf die Laufschiene 4 gezogen. Mit der nächsten Palette geschieht das gleiche, bis die gesamte Länge der Palettentragkette 2 auf der Laufschiene 4 liegt und die Gesamtzahl der Paletten trägt (vergleiche die sukzessive Füllung der Regalkanäle 31a bis 31d in Fig. 6). Die Palettenreihe wird am vorderen Kanalende durch einen festen Anschlag gehalten, über welchen der Gabelstapler die jeweils vorderste Palette darüberhebt.

Zum Auslagern wird umgekehrt erst die vorderste Palette weggenommen, indem sie vorne über den Anschlag gehoben wird. Beim Zurückfahren der auf den Gabelstaplerzinken sitzenden Palette folgt die ganze noch im Kanal stehende Palettenreihe unter der Schwerkraft nach. Sie wird dabei durch die vom Gabelstapler herausgenommene Palette am Beschleunigen gehindert. Da die erste nachfolgende Palette nicht angehoben ist und auf der Kette aufliegt, fährt sie ohne weiteres Zutun an den Anschlag und wird dort gehalten.

Bei den bisher unter Bezugnahme auf die Fig. 1 bis 5 beschriebenen Palettentragketten 2 waren die Traglaschen 9 mit Bohrungen ausgestattet, durch welche die Kettenbolzen 14 bei der Montage der Kette hindurchgesteckt werden mussten. Eine derartige Montagetechnik ist relativ zeitaufwendig und führt damit auch zu erhöhten Herstellungskosten. Um die Montage der Kettenglieder zu beschleunigen, ist es vorteilhaft, gemäss Fig. 7 in den Traglaschen 9 nach unten offene, schräg nach innen gerichtete Schlitze 36 vorzusehen, in welche die Kettenbolzen 14 seitwärts (von unten) eingeschoben werden können. Damit entfällt das zeitraubende Durchstecken der Kettenbolzen 14. Um bei der fertig montierten Kette ein unbeabsichtigtes Herausrutschen der Kettenbolzen 14 aus den Schlitzen 36 zu verhindern, ist es zweckmässig, den Abstand D der Seitenlaschen 13 bzw. 13a,b untereinander im montierten Zustand so gering zu wählen, dass sie bereits aneinanderstossen, bevor die Kettenbolzen 14 in den schrägen Schlitzen 36 zu weit nach unten gerutscht sind.

Weiterhin ist es in diesem Zusammenhang zweckmässig, die Kettenbolzen 14 als Schraubbolzen auszubilden, die jeweils mittels einer zwischen den Seitenlaschen 13a,b angeordneten Abstandshülse 34 mit den Seitenlaschen 13a,b verschraubt sind. Die Tragrollen 11 sind dann entsprechend auf den Abstandshülsen 34 drehbar gelagert, wobei auch hier wiederum als Tragrollenlager 12 ein Wälzlager oder aber ein Gleitlager in Betracht kommt.

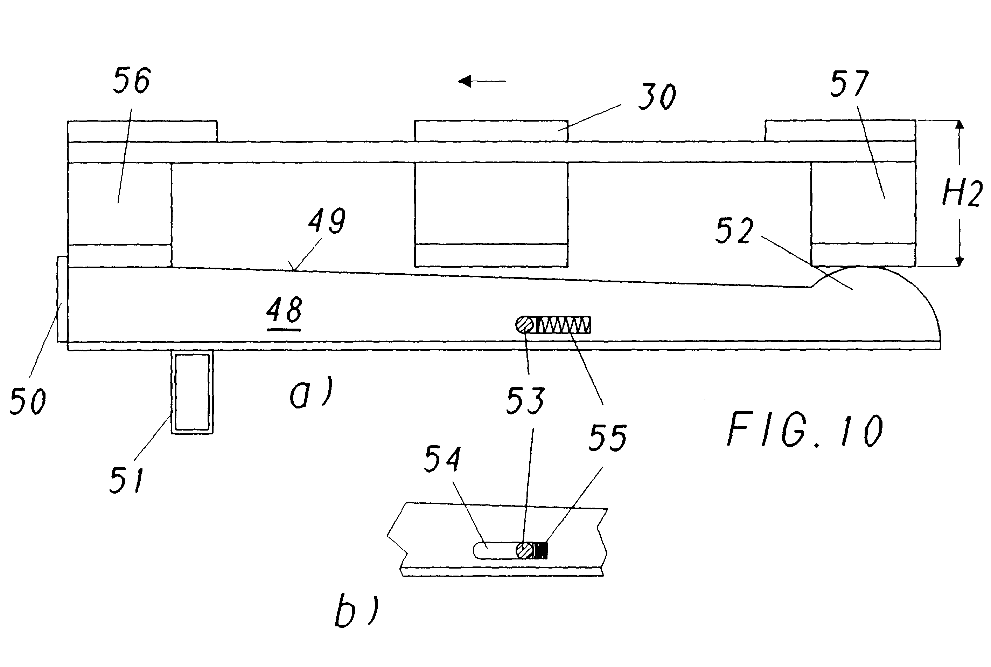

Der Anlaufwiderstand der Palettentragkette 2 in der erfindungsgemässen Palettentragschiene 1 beträgt weniger als 2 % der aufgesetzten Last. Es sind daher grundsätzlich mehrere Betriebskonzepte nutzbar:
- Die Schienen werden mit einem Gefälle von 2 % eingebaut, so dass beim Wegheben der vordersten Palette der ganze auf den Schienen stehenden Pulk durch die Schwerkraft beschleunigt wird. Bei diesem Konzept sind energieverzehrende Endstopper notwendig.
- Die Schienen werden in horizontaler Lage eingebaut, so dass durch dass Wegziehen der vordersten Palette die dahinter auf den Schienen stehenden nachfolgen. Bezüglich Platzbedarf und Aufwand für die Montage ist der waagerechte Einbau von grossem Vorteil; energieverzehrende Endstopper können entfallen.
   Ein geschickter Gabelstapler-Fahrer kann in diesem Fall die erste Palette so anheben und ziehen, dass sie mit dem vordersten Auflagebrett auf den Gabeln aufliegt und von diesen mitgeschleppt wird, während sie mit dem hinteren Auflagebrett noch auf den Palettentragketten ruht und diese mitzieht.
- eine betrieblich praktische Lösung besteht darin, dass die Schienen mit etwa 1 % Gefälle verlegt werden, so dass beim Wegnehmen der Paletten eine sehr kleine Zugkraft aufgebracht werden muss, die sich durch leichtes Schrägstellen der Gabeln aufbringen lässt. Hier ist aus Sicherheitsgründen ein Endanschlag mit Bremsvorrichtung nötig, wie er weiter unten im Zusammenhang mit Fig. 10 noch erläutert werden soll.

Wenn die Palettentragschienen 1 in horizontaler Lage eingebaut werden, kann die treibende Kraft, die sonst bei Vorhandensein einer Neigung durch die Schwerkraft erzeugt wird, durch eingebaute Kraftspeicher ersetzt werden. Ein bevorzugtes Ausführungsbeispiel für einen solchen in die Schiene eingebauten Kraftspeicher ist in Fig. 8 dargestellt. Die Fig. 8 zeigt im Schema eine Palettentragschiene 1 mit Obertrum OT und Untertrum UT sowie einer entsprechenden Kettenumlenkvorrichtung 20 und einer hinteren Umlenkvorrichtung 32. Das Trum setzt sich zusammen aus der durch Rollen angedeuteten Palettentragkette 2 und einem Rücklaufseil 33, welches über eine Umlenkrolle 41 in der hinteren Umlenkvorrichtung 32 umgelenkt wird.

Als Kraftspeicher ist ein zwischen der Palettentragschiene 1 und dem Trum befestigtes Gummiseil 37 vorgesehen, welches ebenfalls mittels einer Umlenkrolle 38 umgelenkt wird. Das Gummiseil 37 weist eine geringe Spannung auf, wenn sich die Palettentragkette 2 überwiegend im Untertrum UT befindet, und wird zunehmend gedehnt und übt eine zunehmende Rückzugsspannung aus, je weiter die Palettentragkette 2 aus dem Untertrum UT in das Obertrum OT gezogen wird. Damit entsteht ein ähnlicher Effekt wie beim zurückstossen der Paletten gegen die auf einer schiefen Ebene wirkende Schwerkraft. Die Spannung der Palettentragkette 2 selbst kann dadurch erzeugt werden, dass das Rücklaufseil 33 ebenfalls elastisch ausgebildet ist, d.h. entweder ein Gummiseil ist oder eine Zugfeder enthält.

In Fig. 8 ist weiterhin dargestellt, dass in Weiterbildung der Erfindung zur permanenten selbsttätigen Reinigung der Lauffläche im Obertrum OT zwischen der Palettentragkette 2 und dem Rücklaufseil eine Bürste 39 angeordnet werden kann. Die Bürste 39 liegt mit ihren Borsten auf der Lauffläche auf und fegt Verunreinigungen von der Lauffläche, wenn sie beim Ein- oder Auslagern von Paletten zusammen mit der Palettentragkette 2 über die Laufschiene gezogen wird. Die Funktion der in Fig. 8 ebenfalls dargestellten und mit dem Bezugszeichen 40 versehenen Ueberwachungseinrichtung wird weiter unten noch erläutert.

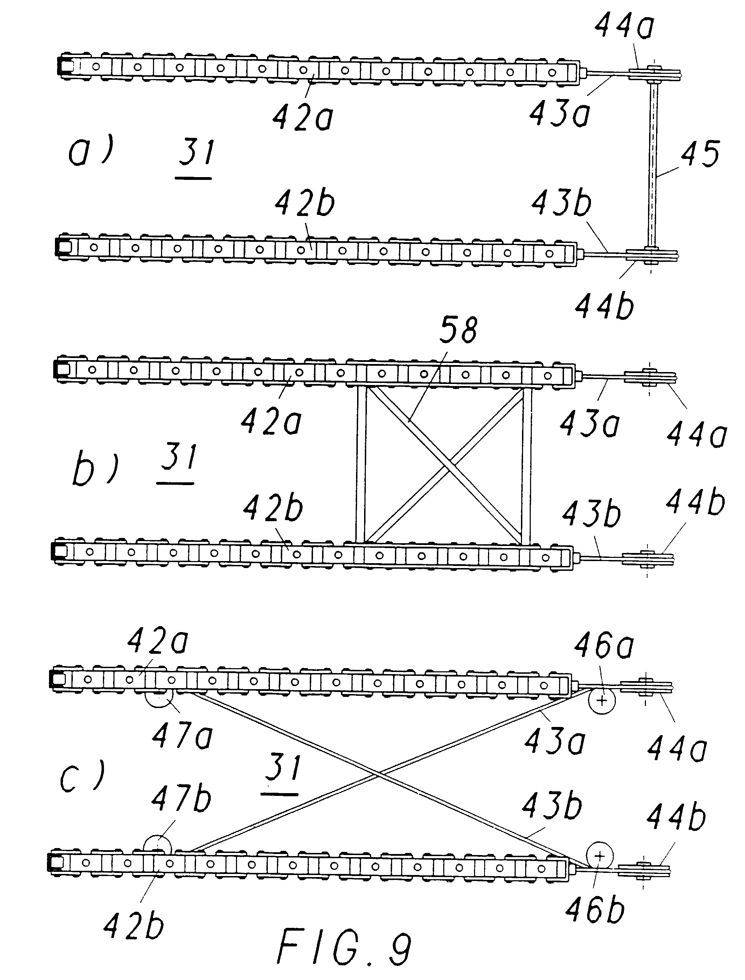

Wie bereits oben erwähnt, sind in dem erfindungsgemässen Einschubregal nach Fig. 6 in jedem der Regalkanäle wenigstens zwei parallel angeordnete Palettentragschienen mit entsprechenden Palettentragketten angeordnet, die jeweils einstückig ausgebildet sind und sich über mehrere Palettenplätze bzw. die gesamte Länge des Regalkanals erstrecken. Damit die Paletten sich nicht um eine senkrechte Achse drehen oder Verkanten können, müssen alle Palettentragketten eines Kanals zwangsweise im Gleichlauf gehalten werden. Im Zusammenhang mit Fig. 3 ist bereits beschrieben worden, dass der Gleichlauf durch eine Kopplung der gezahnten Umlenkräder 21 erfolgen kann. Verschiedene andere Ausführungsbeispiele für entsprechende Gleichlauf-Vorkehrungen sind in den Fig. 9a-c wiedergegeben.

Fig. 9a-c zeigen jeweils in der Draufsicht innerhalb eines Regalkanals 31 zwei parallele Palettentragketten 42a,b im Obertrum, die an ihrem einen Ende in entsprechende Rücklaufseile 43a,b übergehen. Die Rücklaufseile 43a,b sind dabei in der hinteren Umlenkvorrichtung über Umlenkrollen 44a,b umgelenkt. Beim ersten Ausführungsbeispiel der Fig. 9a sind die beiden Umlenkrollen 44a,b durch eine gemeinsame Achse 45 miteinander kraftschlüssig verbunden. Beim zweiten Ausführungsbeispiel aus Fig. 9b ist das erste palettentragende Teilstück beider Palettentragketten 42a,b durch entsprechende Querverstrebungen zu einem Rollschlitten 58 verbunden, der auch die beiden Kettenstränge parallel zueinander führt. Beim dritten Ausführungsbeispiel der Fig. 9c schliesslich sind die Rücklaufseile 43a,b - z.B. mittels entsprechender Umlenkrollen 46a,b und 47a,b - gekreuzt und mit der jeweils anderen Kette verbunden, so dass jede Bewegung der einen Kette zugleich eine entsprechende Bewegung der anderen Kette nach sich zieht.

Es ist im Betrieb eines Einschubregals nach Fig. 6 von grossem, wenn der Fahrer des Bediengerätes (z.B. des Gabelstaplers) erkennen kann, wieviel Paletten im jeweiligen Kanal stehen. Da er immer nur mit einer Palette arbeitet, die vorn am Bedienungsgang steht, kann er nicht ohne weiteres erkennen, wieviel Paletten dahinter stehen, und ob er überhaupt noch eine Palette einschieben darf. Es ist deshalb zweckmässig und vorteilhaft, zumindest an einer Palettentragschiene jedes Regalkanals Mittel zur Erkennung der Stellung der jeweiligen Palettentragkette vorzusehen.

Für die Signalisierung der Kettenstellung gibt es verschiedene Lösungen: Zum einen können die Erkennungsmittel eine einfache optische Kodierung einzelner Glieder und/oder Abschnitte der Palettentragkette umfassen. Die unterste Komfortstufe besteht in diesem Fall darin, dass der letzte Strang der Kettenglieder, der aus dem Untertrum aufsteigt, wenn die letzte Palette aufgesetzt werden soll, auffällig (z.B. signalrot) lackiert ist. Um den Anstrich dauerhaft vor Beschädigungen zu schützen, können die Traglaschen 9 entsprechend eingeprägt sein. Eine anspruchsvollere Lösung besteht darin, dass in den besagten Einprägungen der Traglaschen 9 Bar-Code-Etiketten angebracht sind, die durch ein zwischen den Gabeln des Gabelstaplers angebrachtes Lesegerät gelesen werden. Diese Etiketten geben, stirnseitig am Regal gelesen, Informationen ab über die Kanalnummer, den bedienten Platz und die korrekte Stellung der Kette, insbesondere, ob sie Paletten ohne Platzverlust aufnehmen kann. Weiterhin ist es auch denkbar, dass zur Anzeige der in den Kanal eingeschobenen Paletten auf den Seitenlaschen 13 Alu-Schilder mit aufgeschraubt werden. Diese Alu-Schilder tragen dann z.B. gut sichtbare Ziffern, die vom bedienenden Gabelstaplerfahrer gelesen werden können.

Zum anderen können die Erkennungsmittel die bereits erwähnte Ueberwachungseinrichtung 40 (Fig. 8) umfassen, welche selbsttätig (z.B. durch Lichtschranken oder elektrische Kontaktgabe oder berührungslose elektromagnetische Messung) einzelnen Glieder und/oder Abschnitte der Palettentragkette 2 detektiert und daraus die Stellung der Kette ableitet und zur Anzeige bringt.

Im Zusammenhang mit den oben beschriebenen Betriebskonzepten ist bereits darauf hingewiesen worden, dass unter bestimmten Umständen für die Paletten in einem Kanal ein Endanschlag mit einer Bremsvorrichtung notwendig ist. Ein bevorzugtes Ausführungsbeispiel einer solchen Vorrichtung ist in Fig. 10 dargestellt, wobei in der Teilfigur 10a die Ruhelage einer Palette nach dem Abbremsen gezeigt ist, während der in der Teilfigur 10b wiedergegebene Ausschnitt sich auf den Abbremsvorgang selbst bezieht.

Die Bremsvorrichtung umfasst eine in Richtung des Regalkanals 31 bzw. 31a-d liegende Bremswippe 48, welche mittels einer in Längsrichtung schlitzförmigen Lagerbüchse 54 in Längsrichtung verschiebbar in einem feststehenden Lagerzapfen 53 gelagert ist und sich auf einem Querträger 51 abstützen kann. Auf die Bremswippe 48 kann eine abzubremsende Palette aufgleiten. An dem zum Eingang des Regalkanals weisenden Ende der Bremswippe 48 ist ein Anschlag 50 für die abgebremste Palette vorgesehen. Innerhalb der Lagerbüchse 54 ist ein (in Fig. 10 schematisiert dargestelltes) Federelement 55, insbesondere in Form eines Elastomer-Elements, angeordnet. Das Federelement 55 wird durch den Lagerzapfen 53 in der Lagerbüchse 54 zusammengedrückt (Fig. 10b), wenn eine Palette mit ihrer vorderen Quertraverse 56 an dem Anschlag 50 anschlägt. An dem vom Eingang des Regalkanals wegweisenden Ende der Bremswippe 48 ist eine Steuerkurve 52 vorgesehen, durch welche der Anschlag 50 nach oben in die Eingriffsstellung gebracht wird, wenn eine Palette mit ihrer hinteren Quertraverse 57 über sie hinweggleitet und sie nach unten drückt. Bereits vor Erreichen des Anschlags 50 tritt dadurch ein Bremseffekt auf, weil die Oberkante der Bremswippe 48 an die vordere Quertraverse 56 der Palette gedrückt wird. Diese Oberkante kann bei Bedarf mit einem zusätzlichen Bremsbelag versehen werden.

Obgleich im Vorangegangenen der Einsatz der erfindungsgemässen Palettentragschienen nur im Rahmen eines vollständigen Einschubregals erläutert wurde, ist es vorteilhaft, auch einzelne Transportbahnen für Paletten oder vergleichbare Behälter mit diesen Palettentragschienen auszurüsten, weil sich bei geringer Bauhöhe und leichtem Lauf sehr günstige Fördereigenschaften ergeben.

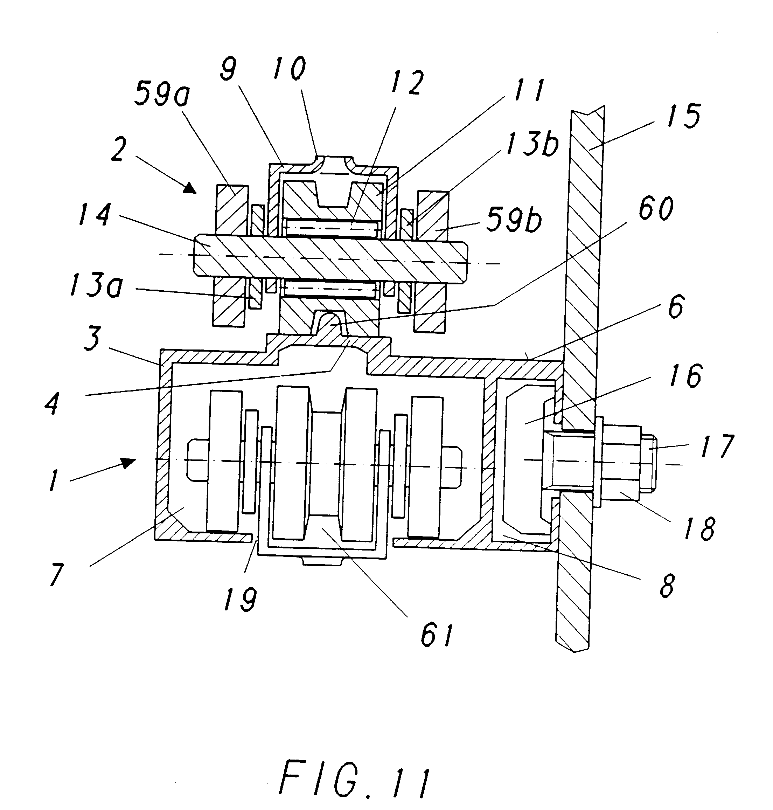

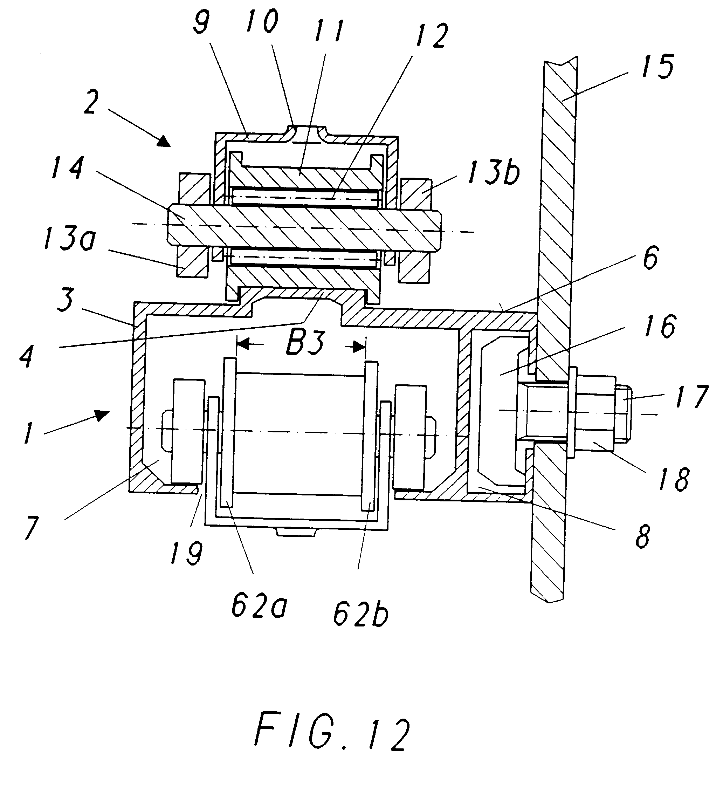

Schliesslich ist es auch denkbar, andere kompakte Formen für die seitliche Führung der Palettentragkette 2 zu verwenden. Zwei weitere Möglichkeiten, die sich nicht auf die Seitenlaschen 13a,b beziehen, sondern die Tragrollen selbst für die seitliche Führung einsetzen, sind in den Fig. 11 und 12 in Form von Ausführungsbeispielen wiedergegeben, die in ihrem Aufbau vergleichbar sind mit Fig. 1.

Das Beispiel der Fig. 11 zeigt Tragrollen 11 einer nicht zur Erfindung gehörenden Palettentrugschiene mit Seiten rollen 5a,b, bei der die Tragrollen 11, als Bordrollen ausgebildet sind, d.h., einen im Durchmesser reduzierten Mittelteil besitzen. Der reduzierte Mittelteil bildet eine umlaufende Führungsnut 61, in die eine auf der Laufschiene 4 erhaben angeordnete Führungsschiene eingreift und so eine seitliche Führung sicherstellt. Die Seitenlaschen 13a,b können in diesem Fall relativ frei gestaltet werden, weil sie für die Seitenführung nicht verwendet werden. Selbstverständlich ist in diesem Zusammenhang auch eine zu Nut und Schiene umgekehrte Lösung denkbar, bei welcher in der Laufschiene 4 eine Nut vorgesehen ist, während die Tragrollen 11 im Mittelbereich einen umlaufenden Wulst aufweisen, der in die Nut eingreift und die seitliche Führung gewährleistet. Ungünstig ist hierbei allerdings eine leichtere Verschmutzung der Laufschienennut.

Das Beispiel der Fig. 12 zeigt eine weitere Lösung mit Seitenführung durch die Tragrollen selbst. Auch hier sind die Tragrollen 11 als Bordrollen ausgebildet, und sind seitlich durch erhöhte Rollenborde 62a,b begrenzt. Der Abstand B3 der Rollenborde 62a,b ist im Vergleich zur Breite B1 der Laufschiene 4 ähnlich gewählt wie beim Beispiel der Fig. 1. die Rollenborde 62a,b sind in ihrem Durchmesser so bemessen, dass die nach unten über die Lauffläche hinausragen und so die seitliche Führung gewährleisten. Die Seitenlaschen 13a,b können auch in diesem Fall weitgehend beliebig ausgestaltet sein.

Insgesamt steht mit der Erfindung ein Transportsystem für Paletten und vergleichbare Behälter zur Verfügung, welches sich durch geringe Bauhöhe und einfache Bedienung auszeichnet, leicht in bestehenden Lagerregalen nachgerüstet werden kann, und wartungsfreundlich und störungsarm ist.

### BEZEICHNUNGSLISTE

- 1,1a-d: Palettentragschiene
- 2,2a-d: Palettentragkette
- 3: Tragprofil
- 4: Laufschiene
- 5: Lauffläche
- 6: Stützfläche
- 7: Rücklaufkanal
- 8: Befestigungsnut
- 9: Traglasche
- 10: Rippe
- 11: Tragrolle
- 12: Tragrollenlager (Wälzlager)
- 13,13a,b: Seitenlasche
- 14: Kettenbolzen
- 15: Seitenteil
- 16: Hammerkopfschraube
- 17: Schraubgewinde
- 18: Mutter
- 19: schlitzförmige Oeffnung
- 20,20a-d: Kettenumlenkvorrichtung
- 21: Umlenkrad
- 22: Zahn
- 23: Umlenkelement mit fester Stützkurve
- 24: Umlenkelement mit elastisch gelagerter Stützkurve
- 25: Aussenring
- 26: elastischer Zwischenring (Gummi)
- 27: Innenring
- 28: Einschubregal
- 29: Regalstütze
- 30: Palette
- 31,31a-d: Regalkanal
- 32,32a-d: hintere Umlenkvorrichtung
- 33,33a-d: Rücklaufseil
- 34: Abstandshülse
- 35: Zacken
- 36: Schlitz
- 37: Gummiseil
- 38: Umlenkrolle (Gummiseil)
- 39: Bürste
- 40: Ueberwachungseinrichtung
- 41: Umlenkrolle (Rücklaufseil)
- 42a,b: Palettentragkette
- 43a,b: Rücklaufseil
- 44a,b: Umlenkrolle (Rücklaufseil)
- 45: Achse (Umlenkrollen)
- 46a,b: Umlenkrolle
- 47a,b: Umlenkrolle
- 48: Bremswippe
- 49: Bremsfläche
- 50: Anschlag
- 51: Querträger
- 52: Steuerkurve
- 53: Lagerzapfen
- 54: Lagerbüchse (schlitzförmig)
- 55: Federelement (Elastomer)
- 56: vordere Quertraverse (Palette)
- 57: hintere Quertraverse (Palette)
- 58: Rollschlitten
- 59a,b: Seitenrollen
- 60: Führungsschiene
- 61: Führungsnut
- 62a,b: Rollenbord
- B1: Breite der Laufschiene 4
- B2: Abstand der Seitenlaschenpaare 13a,b
- B3: Abstand der Rollenborde 62a,b
- D: Abstand der Seitenlaschen
- H1: Höhe Palettentragschiene
- H2: Höhe Europalette
- OT: Obertrum
- UT: Untertrum

## Patentansprüche

1. Palettentragschiene zur Förderung von Paletten und Behältern, umfassend
(a) eine Palettentragkette (2, 2a-d) in Form einer Rollenkette mit einer Mehrzahl von hintereinander angeordneten und gleichmässig beabstandeten Tragrollen (11);
(b) eine Laufschiene (4), auf welcher die Tragrollen (11) abrollen;
(c) eine Vielzahl von Traglaschen (9), welche mit den Tragrollen (11) verbunden sind und mittels der Tragrollen (11) auf der Laufschiene (4) verschiebbar sind; wobei
(e) an den Tragrollen (11) Mittel zur seitlichen Führung der Tragrollen (11) vorgesehen sind;
(f) in der Palettentragkette (2, 2a-d) die Tragrollen (11) paarweise durch Seitenlaschen (13, 13a,b) und die Traglaschen (9) verbunden sind;
(g) die Tragrollen (11) jeweils auf einem Kettenbolzen (14) drehbar gelagert sind, welcher Kettenbolzen (14) mit den Seitenlaschen (13, 13a,b) eines Paares kraftschlüssig verbunden ist;
(h) am einen Ende der Palettentragschiene (1, la-d) eine Kettenumlenkvorrichtung (20, 20a-d) vorgesehen ist, welche die Palettentragkette (2, 2a-d) in die Gegenrichtung umlenkt und auf diese Weise in ein Obertrum (OT) und ein darunterliegendes Unter- bzw. Rücktrum (UT) aufteilt; und
(i) die Laufschiene (4) Teil eines Tragprofils (3) ist;
dadurch gekennzeichnet, dass
(k) das Tragprofil (3) unterhalb der Laufschiene (4) als weitgehend geschlossener Rücklaufkanal (7) ausgebildet ist, in welchem Rücklaufkanal (7) das Untertrum (UT) der Palettentragkette (2, 2a-d) aufgenommen und geführt ist; und
(l) im Rücklaufkanal (7), der nach unten hin eine schlitzförmige Oeffnung (19) aufweist, die Palettentragkette 2 so geführt wir, dass die Seitenlaschen (13a,b) auf den Rändern der Oeffnung (19) aufliegen und dort reibungsarm gleiten können, während die Traglaschen (9) frei in der Oeffnung (19) hängen.

2. Palettentragschiene nach Anspruch 1, dadurch gekennzeichnet, dass das Tragprofil (3) aus Aluminium ist und die Seitenlaschen (13, 13a,b) aus einem glatten Kunststoff, vorzugsweise aus PTFE, gefertigt sind.

3. Palettenschiene nach einem der Ansprüche 1 und 2, dadurch gekennzeichnet, dass die Traglaschen (9) und Seitenlaschen (13, 13a,b) derart alternierend angeordnet sind, dass jeweils eine Traglasche und ein benachbartes Paar von Seitenlaschen eine Tragrolle gemeinsam haben.

4. Palettentragschiene nach Anspruch 1, dadurch gekennzeichnet, dass
(a) die Laufschiene (4) in ihrer Breite (B1) kleiner gewählt ist als der Abstand (B2) der beiden Seitenlaschen (13a,b) eines Paares; und
(b) die Seitenlaschen (13, 13a,b) soweit nach unten vorstehen, dass sie seitliche Kräfte seitlich von aussen an die Laufschiene (4) übertragen und damit die Palettentragkette (2, 2a-d) seitlich führen.

5. Palettentragschiene nach Anspruch 1, dadurch gekennzeichnet, dass die Tragrollen (11) als Bordrollen ausgebildet sind und im Mittelbereich eine umlaufende Führungsnut (61) aufweisen, und dass auf der Laufschiene (4) eine erhabene Führungsschiene (60) vorgesehen ist, welche jeweils in die Führungsnut (61) hineinragt und die Tragrollen (11) seitlich führt.

6. Palettentragschiene nach Anspruch 1, dadurch gekennzeichnet, dass
(a) die Tragrollen (11) als Bordrollen ausgebildet sind und an den Rändern umlaufende Rollenborde (62a,b) aufweisen;
(b) die Laufschiene (4) in ihrer Breite (B1) kleiner gewählt ist als der Abstand (B3) der beiden Rollenborde (62a,b); und
(c) die Rollenborde (62a,b) soweit nach unten vorstehen, dass sie seitliche Kräfte seitlich von aussen an die Laufschiene (4) übertragen und damit die Palettentragkette (2, 2a-d) seitlich führen.

7. Palettentragschiene nach Anspruch 3, dadurch gekennzeichnet, dass die Kettenbolzen (14) mit Pressitz in die Seitenlaschen (13, 13a,b) eingepresst sind.

8. Palettentragschiene nach Anspruch 3, dadurch gekennzeichnet, dass die Kettenbolzen (14) als Schraubbolzen ausgebildet sind und mittels einer zwischen den Seitenlaschen (13, 13a,b) angeordneten Abstandshülse (34) mit den Seitenlaschen (13, 13a,b) verschraubt sind, wobei die Tragrollen (11) jeweils auf den Abstandshülsen (34) drehbar gelagert sind.

9. Palettentragschiene nach einem der Ansprüche 1 bis 8, dadurch gekennzeichnet, dass die Tragrollen (11) auf den Kettenbolzen (14) bzw. den Abstandshülsen (34) mittels eines Wälzlagers (12) gelagert sind.

10. Palettentragschiene nach Anspruch 1, dadurch gekennzeichnet, dass die Höhe (H1) der Palettentragschiene (1, 1a-d) mit dem Obertrum (OT) und dem Untertrum (UT) den dreifachen Durchmesser der Tragrollen (11) und/oder die halbe Höhe (H2) einer genormten Europalette nicht oder nicht wesentlich übersteigt.

11. Palettentragschiene nach Anspruch 10, dadurch gekennzeichnet, dass die Kettenumlenkvorrichtung (20, 20a-d) so ausgebildet ist, dass die Gesamthöhe (H) auch im Umlenkbereich eingehalten wird.

12. Palettentragschiene nach Anspruch 11, dadurch gekennzeichnet, dass die Kettenbolzen (14) in Achsenrichtung seitlich über die Seitenlaschen (13, 13a,b) soweit überstehen, dass sie als Uebertragungselemente für Zahnräder verwendet werden können, und dass die Kettenumlenkvorrichtung (20, 20a-d) jeweils ein mit sieben Zähnen (22) ausgestattetes Umlenkrad (21) umfasst, dessen Durchmesser so gewählt ist, dass die auf ihm ablaufende Palettentragkette (2, 2a-d) jeweils einen Zahn überspringt.

13. Palettentragschiene nach Anspruch 11, dadurch gekennzeichnet, dass die Kettenumlenkvorrichtung (20, 20a-d) ein Umlenkelement (23) mit einer festen Stützkurve umfasst, auf welcher Stützkurve die Tragrollen (11) der Palettentragkette (2, 2a-d) bei der Umlenkung ablaufen.

14. Palettentragschiene nach Anspruch 11, dadurch gekennzeichnet, dass die Kettenumlenkvorrichtung (20, 20a-d) ein Umlenkelement (24) mit einer elastisch gelagerten Stützkurve umfasst, auf welcher Stützkurve die Tragrollen (11) der Palettentragkette (2, 2a-d) bei der Umlenkung ablaufen.

15. Palettentragschiene nach Anspruch 14, dadurch gekennzeichnet, dass das Umlenkelement (24) mit der elastisch gelagerten Stützkurve als gummigelagerte Buchse mit einem Innenring (27), einem gummielastischen Zwischenring (26) und einem Aussenring (25) ausgebildet ist.

16. Palettentragschiene nach einem der Ansprüche 1 bis 15, dadurch gekennzeichnet, dass die Laufschiene (4) seitlich von einer tieferliegenden Stützfläche (6) umgeben ist, und dass die führenden Seitenlaschen (13, 13a,b) so weit nach unten vorstehen, dass sie von der Stützfläche (6) nur einen geringen Abstand haben und sich bei einem Kippen der Palettentragkette (2, 2a-d) auf der Stützfläche (6) aufstützen.

17. Palettentragschiene nach einem der Ansprüche 1 bis 16, dadurch gekennzeichnet, dass die Traglaschen (9) ein U-förmiges Profil und zum Fixieren der beförderten Paletten bzw. Behälter auf ihrer Oberseite ein Rippe (10) und/oder einen Zakken (35) aufweisen.

18. Palettentragschiene nach einem der Ansprüche 1 bis 17, dadurch gekennzeichnet, dass die Seitenlaschen (13, 13a,b) auf ihrer Unterseite ein Zahnstangenprofil tragen, so dass das Obertrum (OT) und das Untertrum (UT) über Zahnräder zur Uebertragung der Bewegung miteinander verbunden werden können.

19. Palettentragschiene nach einem der Ansprüche 1 bis 18, dadurch gekennzeichnet, dass zur Erleichterung der Montage der Palettentragkette (2, 2a-d) für die Kettenbolzen (14) in den Traglaschen (9) nach unten offene, schräg nach innen gerichtete Schlitze (36) vorgesehen sind, in welche die Kettenbolzen (14) seitwärts eingeschoben werden können.

20. Palettentragschiene nach einem der Ansprüche 1 bis 19, dadurch gekennzeichnet, dass Ober- und Untertrum (OT bzw. UT) zusammen ein umlaufendes Trum bilden, welches am anderen Ende der Palettentragschiene (1, 1a-d) über eine hintere Umlenkvorrichtung (32a-d) umgelenkt wird, und dass nur etwa die halbe Länge des umlaufenden Trums als Palettentragkette (2, 2a-d) ausgebildet ist, während die andere Hälfte des Trums aus Zugmitteln besteht, welche die Enden der Palettentragkette (2, 2a-d) zur Uebertragung von Zugkräften miteinander verbinden.

21. Palettentragschiene nach Anspruch 20, dadurch gekennzeichnet, dass die Zugmittel ein Gurtband bzw. Rücklaufseil (33a-d) umfassen, welches in der hinteren Umlenkvorrichtung (32a-d) über eine Umlenkrolle (41) geführt ist.

22. Palettentragschiene nach Anspruch 21, dadurch gekennzeichnet, dass das Gurtband bzw. Rücklaufseil (33a-d) elastisch ausgebildet ist und als Spannelement für die Palettentragkette (2, 2a-d) dient.

23. Palettentragschiene nach einem der Ansprüche 20 bis 22, dadurch gekennzeichnet, dass an der Verbindungsstelle zwischen den Zugmitteln und der Palettentragkette (2, 2a-d) im Obertrum (OT) eine Bürste (39) angebracht ist, welche bei jeder Vor- und Rückwärtsbewegung der Palettentragkette (2, 2a-d) die Oberfläche der Laufschiene (4) reinigt.

24. Palettentragschiene nach einem der Ansprüche 1 bis 23, dadurch gekennzeichnet, dass ein Gummiseil (37) zwischen Palettentragschiene (1, 1a-d) und Trum vorgesehen ist, welches Gummiseil (37) eine geringe Spannung aufweist, wenn sich die Palettentragkette (2, 2a-d) überwiegend im Untertrum (UT) befindet, und eine zunehmende Rückzugsspannung ausübt, je weiter die Palettentragkette (2, 2a-d) aus dem Untertrum (UT) in das Obertrum (OT) gezogen wird.

25. Palettentragschiene nach Anspruch 1, dadurch gekennzeichnet, dass an dem Tragprofil (3) seitlich eine Befestigungsnut (8) zur Aufnahme von Befestigungsmitteln, insbesondere in Form von Hammerkopfschrauben (16), angeformt ist.

26. Einschubregal zum Lagern von Paletten und Behältern, welches Einschubregal (28) eine Mehrzahl von neben- und/oder übereinander angeordneten Regalkanälen (31, 31a-d) mit mehreren hintereinander angeordneten Palettenplätzen zum sukzessiven Ein- und Auslagern einer Mehrzahl von Paletten und Behältern von einer Regalseite aus umfasst, dadurch gekennzeichnet, dass zum Fördern der Paletten bzw. Behälter in jedem der Regalkanäle (31, 31a-d) wenigstens zwei parallel angeordnete Palettentragschienen (2, 2a-d) mit entsprechenden Palettentragketten (42a,b) nach einem der Ansprüche 1 bis 25 vorgesehen sind, und dass sich die Palettentragschienen (2, 2a-d) jeweils einstückig über mehrere Palettenplätze, vorzugsweise über die gesamte Länge des Regalkanals (31, 31a-d) erstrekken.

27. Einschubregal nach Anspruch 26, dadurch gekennzeichnet, dass die Palettentragschienen (2, 2a-d) mit einem leichten Gefälle, vorzugsweise von kleiner gleich 2 %, insbesondere etwa 1 %, zum Ausgang des Regals hin eingebaut sind.

28. Einschubregal nach einem der Ansprüche 26 und 27, dadurch gekennzeichnet, dass Mittel vorhanden sind, um einen Gleichlauf der Palettentragketten (42a,b) in jedem Regalkanal (31, 31a-d) sicherzustellen.

29. Einschubregal nach Anspruch 28, dadurch gekennzeichnet, dass in jeder der Palettentragschienen (2, 2a-d) Ober- und Untertrum (OT bzw. UT) zusammen ein umlaufendes Trum bilden, welches am anderen Ende der Palettentragschiene (1, 1a-d) über eine hintere Umlenkvorrichtung (32a-d) umgelenkt wird, dass nur etwa die halbe Länge des umlaufenden Trums als Palettentragkette (2, 2a-d) ausgebildet ist, während die andere Hälfte des Trums aus Zugmitteln besteht, welche die Enden der Palettentragkette (2, 2a-d) zur Uebertragung von Zugkräften miteinander verbinden, dass die Zugmittel ein Gurtband bzw. Rücklaufseil (43a,b) umfassen, welches in der hinteren Umlenkvorrichtung (32a-d) über eine Umlenkrolle (44a,b) geführt ist, und dass die Mittel zum Sicherstellen des Gleichlaufes eine Achse (45) umfassen, welche die Umlenkrollen (44a,b) jedes Regalkanals (31, 31a-d) miteinander verbindet.

30. Einschubregal nach Anspruch 28, dadurch gekennzeichnet, dass die Mittel zum Sicherstellen des Gleichlaufes einen zwischen den Palettentragketten (42a,b) jedes Regalkanals (31, 31a-d) angeordneten Rollschlitten (58) umfassen, welcher mit den zugehörigen Palettentragketten (42a,b) des Regalkanals fest verbunden ist.

31. Einschubregal nach Anspruch 28, dadurch gekennzeichnet, dass in jeder der Palettentragschienen (2, 2a-d) Ober- und Untertrum (OT bzw. UT) zusammen ein umlaufendes Trum bilden, welches am anderen Ende der Palettentragschiene (1, 1a-d) über eine hintere Umlenkvorrichtung (32a-d) umgelenkt wird, dass nur etwa die halbe Länge des umlaufenden Trums als Palettentragkette (42a,b) ausgebildet ist, während die andere Hälfte des Trums aus Zugmitteln besteht, welche die Enden der Palettentragkette (42a,b) zur Uebertragung von Zugkräften miteinander verbinden, dass die Zugmittel ein Gurtband bzw. Rücklaufseil (43a,b) umfassen, welches in der hinteren Umlenkvorrichtung (32a-d) über eine Umlenkrolle (44a,b) geführt ist, und dass zum Sicherstellen des Gleichlaufes die Gurtbänder bzw. Rücklaufseile (43a,b) gekreuzt und mit einem Ende jeweils am Ende der anderen Palettentragkette befestigt sind.

32. Einschubregal nach einem der Ansprüche 26 bis 31, dadurch gekennzeichnet, dass an zumindestens einer Palettentragschiene (1, 1a-d) jedes Regalkanals (31, 31a-d) Mittel zur Erkennung der Stellung der jeweiligen Palettentragkette (2, 2a-d, 42a,b) vorgesehen sind.

33. Einschubregal nach Anspruch 32, dadurch gekennzeichnet, dass die Erkennungsmittel eine optische Kodierung einzelner Glieder und/oder Abschnitte der Palettentragkette (2, 2a-d, 42a,b), insbesondere durch Farben oder angebrachte Schilder, umfassen.

34. Einschubregal nach Anspruch 32, dadurch gekennzeichnet, dass die Erkennungsmittel eine Ueberwachungseinrichtung (40) umfassen, welche selbsttätig einzelne Glieder und/oder Abschnitte der Palettentragkette (2, 2a-d, 42a,b) detektiert und daraus die Stellung der Kette ableitet und zur Anzeige bringt.

35. Einschubregal nach einem der Ansprüche 26 bis 34, dadurch gekennzeichnet, dass am Eingang jedes Regalkanals (31, 31a-d) jeweils eine Bremsvorrichtung vorgesehen ist, welche eine auf den Palettentragketten (42a,b) des Kanals in Richtung auf den Eingang rollende Palette automatisch abbremst und an einem Anschlag zum Stoppen bringt.

36. Einschubregal nach Anspruch 35, dadurch gekennzeichnet, dass
(a) die Bremsvorrichtung eine in Richtung des Regalkanals (31, 31a-d) liegende Bremswippe (48) umfasst, welche mittels einer in Längsrichtung schlitzförmigen Lagerbüchse (54) in Längsrichtung verschiebbar in einem feststehenden Lagerzapfen (53) gelagert ist, und auf welche eine abzubremsende Palette aufgleiten kann;
(b) an dem zum Eingang des Regalkanals (31, 31a-d) weisenden Ende der Bremswippe (48) ein Anschlag (50) für die abgebremste Palette vorgesehen ist;
(c) innerhalb der Lagerbüchse (54) ein Federelement (55) angeordnet ist, welches durch den Lagerzapfen (53) zusammengedrückt wird, wenn eine Palette an dem Anschlag (50) anschlägt; und
(d) an dem vom Eingang des Regalkanals (31, 31a-d) wegweisenden Ende der Bremswippe (48) eine Steuerkurve (52) vorgesehen ist, durch welche der Anschlag (50) nach oben in die Eingriffsstellung gebracht wird, wenn eine Palette mit ihrer hinteren Quertraverse (57) über sie hinweggleitet.

37. Transportbahn zum Fördern von Paletten und Behältern, dadurch gekennzeichnet, dass die Transportbahn wenigstens zwei parallel angeordnete Palettentragschienen mit entsprechenden Palettentragketten (42a,b) nach einem der Ansprüche 1 bis 22 aufweist.

38. Palettentragschiene zur Förderung von Paletten und Behältern, umfassend
(a) eine Palettentragkette (2, 2a-d) in Form einer Rollenkette mit einer Mehrzahl von hintereinander angeordneten und gleichmässig beabstandeten Tragrollen (11);
(b) eine Laufschiene (4), auf welcher die Tragrollen (11) abrollen;
(c) eine Vielzahl von Traglaschen (9), welche mit den Tragrollen (11) verbunden sind und mittels der Tragrollen (11) auf der Laufschiene (4) verschiebbar sind; wobei
(d) an den Tragrollen (11) Mittel zur seitlichen Führung der Tragrollen (11) vorgesehen sind;
(e) auf beiden Seiten der Palettentragkette (2, 2a-d) Seitenlaschen (13, 13a,b) angeordnet sind.
(f) am einen Ende der Palettentragschiene (1, 1a-d) eine Kettenumlenkvorrichtung (20, 20a-d) vorgesehen ist, welche die Palettentragkette (2, 2a-d) in die Gegenrichtung umlenkt und auf diese Weise in ein Obertrum (OT) und ein darunterliegendes Unter- bzw. Rücktrum (UT) aufteilt; und
(g) die Laufschiene (4) Teil eines Tragprofils (3) ist;
dadurch gekennzeichnet, dass
(h) das Tragprofil (3) unterhalb der Laufschiene (4) als weitgehend geschlossener Rücklaufkanal (7) ausgebildet ist, in welchem Rücklaufkanal (7) das Untertrum (UT) der Palettentragkette (2, 2a-d) aufgenommen und geführt ist; und
(i) im Rücklaufkanal (7), der nach unten hin eine schlitzförmige Oeffnung (19) aufweist, die Palettentragkette (2) so geführt wir, dass die Seitenlaschen (13a,b) auf den Rändern der Oeffnung (19) aufliegen und dort reibungsarm gleiten können, während die Traglaschen (9) frei in der Oeffnung (19) hängen.

39. Palettentragschiene nach Anspruch 38, dadurch gekennzeichnet, dass das Tragprofil (3) aus Aluminium ist und die Seitenlaschen (13, 13a,b) aus einem glatten Kunststoff, vorzugsweise aus PTFE, gefertigt sind.

40. Palettentragschiene nach einem der Ansprüche 38 und 39, dadurch gekennzeichnet, dass
(a) die Laufschiene (4) in ihrer Breite (B1) kleiner gewählt ist als der Abstand (B2) gegenüberliegender Seitenlaschen (13a,b); und
(b) die Seitenlaschen (13, 13a,b) soweit nach unten vorstehen, dass sie seitliche Kräfte seitlich von aussen an die Laufschiene (4) übertragen und damit die Palettentragkette (2, 2a-d) seitlich führen.

## Claims

1. Pallet support rail for conveying pallets and containers, comprising
(a) a pallet support chain (2, 2a-d) in the form of a roller chain with a plurality of successively arranged, uniformly spaced support rollers (11);
(b) a running rail (4) on which roll the support rollers (11);
(c) a plurality of support straps (9), which are connected to the support rollers (11) and are displaceable on the running rail (4) by means of the support rollers (11); in which
(e) on the support rollers (11) are provided means for the lateral guidance of said support rollers (11);
(f) in the pallet support chain (2, 2a-d) the support rollers (11) are connected pairwise by side straps (13, 13a,b) and the support straps (9);
(g) each of the support rollers (11) is rotatably mounted on a chain pin (14), said chain pin (14) being positively connected to the side straps (13, 13a,b) of a pair;
(h) at one end of the pallet support rail (1, 1a-d) is provided a chain reversal mechanism (20, 20a-d) which reverses the pallet support chain (2, 2a-d) in the opposite direction and in this way divides it into an upper strand (OT) and a lower or reverse strand (UT) located beneath it; and
(i) the running rail (4) is part of a support profile (3);
characterized in that
(k) the support profile (3) is constructed below the running rail (4) as a substantially closed return channel (7), in which is received and guided the lower strand (UT) of the pallet support chain (2, 2a-d); and
(l) in the return channel (7), which is downwardly provided with a slot-like opening (19), the pallet support chain (2) is guided in such a way that the side straps (13a,b) rest on the edges of the opening (19) and can slide there in low-friction manner, whilst the support straps (9) hang freely in the opening (19).

2. Pallet support rail according to claim 1, characterized in that the support profile (3) is made from aluminium and the side straps (13, 13a,b) from a smooth plastic, preferably PTFE.

3. Pallet support rail according to one of the claims 1 and 2, characterized in that the support straps (9) and side straps (13, 13a,b) are so arranged in alternating manner that in each case one support strap and an adjacent pair of side straps have a support roller in common.

4. Pallet support rail according to claim 1, characterized in that
(a) the width (B1) of the running rail (4) is smaller than the spacing (B2) of the two side straps (13a,b) of a pair and
(b) the side straps (13, 13a,b) project downwards to such an extent that they transfer lateral forces laterally from the outside to the running rail (4) and consequently laterally guide the pallet support chain (2, 2a-d).

5. Pallet support rail according to claim 1, characterized in that the support rollers (11) are constructed as rim rollers and have in the central area a circumferential guide groove (61) and that on the running rail (4) is provided a raised guide rail (60), which in each case projects into the guide groove (61) and laterally guides the support rollers (11).

6. Pallet support rail according to claim 1, characterized in that
(a) the support rollers (11) are constructed as rim rollers and have roller rims (62a,b) round their edges;
(b) the width (B1) of the running rail (4) is smaller than the spacing (B3) of the two roller rims (62a,b); and
(c) the roller rims (62a,b) project downwards to such an extent that they transfer lateral forces laterally from the outside to the running rail (4) and consequently laterally guide the pallet support chain (2, 2a-d).

7. Pallet support rail according to claim 3, characterized in that the chain pins (14) are pressed with press fit into the side straps (13, 13a,b).

8. Pallet support rail according to claim 3, characterized in that the chain pins (14) are constructed as threaded bolts and are screwed to the side straps (13, 13a,b) by means of a spacer sleeve (34) positioned between said side straps (13, 13a,b), the support rollers (11) being in each case mounted in rotary manner on the spacer sleeves (34).

9. Pallet support rail according to one of the claims 1 to 8, characterized in that the support rollers (11) are mounted on the chain pins (14) or the spacer sleeves (34) by means of a roller bearing (12).

10. Pallet support rail according to claim 1, characterized in that the height (H1) of the pallet support rail (1, 1a-d) with the upper strand (OT) and lower strand (UT) does not or does not significantly exceed three times the diameter of the support rollers (11) and/or half the height (H2) of a standard Euro-pallet.

11. Pallet support rail according to claim 10, characterized in that the chain reversal mechanism (20, 20a-d) is so constructed that the overall height (H) is also maintained in the reversal area.

12. Pallet support rail according to claim 11, characterized in that in the axial direction the chain pins (14) project laterally over the side straps (13, 13a,b) to such an extent that they can be used as transmission elements for toothed wheels and that the chain reversal mechanism (20, 20a-d) in each case comprises a reversal wheel (21) equipped with seven teeth (22) and whose diameter is such that the pallet support chain (2, 2a-d) running thereon in each case skips a tooth.

13. Pallet support rail according to claim 11, characterized in that the chain reversal mechanism (20, 20a-d) comprises a reversal element (23) with a fixed support cam, on which run the support rollers (11) of the pallet support chain (2, 2a-d) during reversal.

14. Pallet support rail according to claim 11, characterized in that the chain reversal mechanism (20, 20a-d) comprises a reversal element (24) with an elastically mounted support cam, on which the support rollers (11) of the pallet support chain (2, 2a-d) run during the reversal.

15. Pallet support rail according to claim 14, characterized in that the reversal element (24) with the elastically mounted support cam is constructed as a rubber-mounted bush with an inner ring (27), a rubber-like intermediate ring (26) and an outer ring (25).

16. Pallet support rail according to one of the claims 1 to 15, characterized in that the running rail (4) is laterally surrounded by a lower-lying support surface (6) and that the guiding side straps (13, 13a-b) project downwards to such an extent that they only have a limited spacing from the support surface (6) and in the case of a tilting of the pallet support chain (2, 2a-d) are supported on the support surface (6).

17. Pallet support rail according to one of the claims 1 to 16, characterized in that the support straps (9) have a U-shaped profile and for fixing the conveyed pallets or containers on the top thereof are provided with a rib (10) and/or a prong (35).

18. Pallet support rail according to one of the claims 1 to 17, characterized in that on their underside the side straps (13, 13a,b) carry a rack profile, so that the upper strand (OT) and lower strand (UT) can be interconnected by means of toothed wheels for the movement transfer.

19. Pallet support rail according to one of the claims 1 to 18, characterized in that to facilitate installation of the pallet support chain (2, 2a-d) for the chain pins (14) are provided in the support straps (9) downwardly open, inwardly inclined slots (36), in which the chain pins (14) can be inserted sideways.

20. Pallet support rail according to one of the claims 1 to 19, characterized in that the upper and lower strands (OT and UT) together form a circulating strand, which is reversed at the other end of the pallet support rail (1, la-d) by means of a rear reversal mechanism (32a-d) and that roughly only half the length of the circulating strand is constructed as a pallet support chain (2, 2a-d), whilst the other half of the strand comprises pulling means, which interconnect the ends of the pallet support chain (2, 2a-d) for the transfer of the pulling forces.

21. Pallet support rail according to claim 20, characterized in that the pulling means comprise a strap or return cable (33a-d), which is guided by means of a reversing roller (41) in the rear reversal mechanism (32a-d).

22. Pallet support rail according to claim 21, characterized in that the belt or return cable (33a-d) is constructed elastically and serves as a tension element for the pallet support chain (2, 2a-d).

23. Pallet support rail according to one of the claims 20 to 22, characterized in that at the connection point between the pulling means and the pallet support chain (2, 2a-d) in the upper strand (OT) is fitted a brush (39), which cleans the surface of the running rail (4) during each forward and reverse movement of the pallet support chain (2, 2a-d).

24. Pallet support rail according to one of the claims 1 to 23, characterized in that a rubber cable (37) is provided between the pallet support rail (1, 1a-d) and the strand, said rubber cable (37) having a limited tension, when the pallet support chain (2, 2a-d) is mainly in the lower strand (UT) and exerts an increasing pull-back tension, the further the pallet support chain (2, 2a-d) is drawn from the lower strand (UT) into the upper strand (OT).

25. Pallet support rail according to claim 1, characterized in that onto the support profile (3) is laterally shaped a fastening groove (8) for receiving fastening means, particularly in the form of hammerhead screws (16).

26. Slide-in shelf unit for storing pallets and containers, said slide-in shelf unit (28) having a plurality of juxtaposed and/or superimposed shelf channels (31, 31a-d) with a plurality of successively arranged pallet spaces for the successive placing in and removal from storage of a plurality of pallets and containers from one shelf side, characterized in that for conveying pallets or containers in each of the shelf channels (31, 31a-d) there are at least two parallel pallet support rails (2, 2a-d) with corresponding pallet support chains (42a,b) according to one of the claims 1 to 25 and that the pallet support rails (2, 2a-d) in each case extend in one piece over several pallet spaces, preferably over the entire length of the shelf channel (31, 31a-d).

27. Slide-in shelf unit according to claim 26, characterized in that the pallet support rails (2, 2a-d) are installed with a slight inclination, preferably equal to or smaller than 2% and in particular approximately 1% towards the shelf outlet.

28. Slide-in shelf unit according to one of the claims 26 and 27, characterized in that means are provided to ensure a synchronism of the pallet support chains (42a,b) in each shelf channel (31, 31a-d).

29. Slide-in shelf unit according to claim 28, characterized in that in each of the pallet support rails (2, 2a-d) the upper and lower strand (OT and UT) together form a circulating strand, which is reversed at the other end of the pallet support rail (1, 1a-d) by means of a rear reversal mechanism (32a-d), that approximately only half the length of the circulating strand is constructed as a pallet support chain (2, 2a-d), whilst the other half of the strand comprises pulling means, which interconnect the ends of the pallet support chain (2, 2a-d) for the transfer of pulling forces, that the pulling means comprise a strap or return cable (43a,b), which in the rear reversal mechanism (32a-d) is guided by means of a reversing roller (44a,b) and that the means for ensuring synchronism comprise a shaft (45) interconnecting the reversing rollers (44a,b) of each shelf channel (31, 31a-d).

30. Slide-in shelf unit according to claim 28, characterized in that the means for ensuring synchronism comprise a roller guide (58) placed between the pallet support chains (41,b) of each shelf channel (31) and which is firmly connected to the associated pallet support chains (42a,b) of the shelf channel.

31. Slide-in shelf unit according to claim 28, characterized in that in each of the pallet support rails (2, 2a-d) upper and lower strands (OT and UT) together form a circulating strand, which is reversed at the other end of the pallet support rail (1, 1a-d) by means of a rear reversal mechanism (32a-d), that approximately only half the length of the circulating strand is constructed as a pallet support chain (42a,b), whilst the other half of the strand comprises pulling means, which interconnect the ends of the pallet support chain (42a,b) for the transfer of pulling forces, that the pulling means comprise a belt or return cable (43a,b), which is guided in the rear reversal mechanism (32a-d) by means of a reversing roller (44a,b) and that for ensuring synchronism the belts or return cables (43a,b) cross and are fixed by one end to in each case the end of the other pallet support chain.

32. Slide-in shelf unit according to one of the claims 26 to 31, characterized in that on at least one pallet support rail (1, 1a-d) of each shelf channel (31, 31a-d) are provided means for detecting the position of the particular pallet support chain (2, 2a-d, 42a,b).

33. Slide-in shelf unit according to claim 32, characterized in that the detection means comprise an optical coding of individual links and/or sections of the pallet support chain (2, 2a-d, 42a,b), particularly by colours or fitted identification plates.

34. Slide-in self unit according to claim 32, characterized in that the detection means comprise a monitoring device (40), which automatically detects individual links and/or sections of the pallet support chain (2, 2a-d, 42a,b) and derives therefrom the position of the chain and indicates the same.

35. Slide-in shelf unit according to one of the claims 26 to 34, characterized in that a braking device is provided at the entrance of each shelf channel (31, 31a-d) and automatically brakes a pallet rolling on the pallet support chains (42a,b) of the channel in the direction of the entrance and stops same at a stop member.

36. Slide-in shelf unit according to claim 35, characterized in that
(a) the braking device comprises a brake rocker (48) located in the direction of the shelf channel (31, 31a-d), which is mounted in longitudinally displaceable manner in a fixed journal (53) by means of a longitudinally slot-like bearing bush (54) and on which can slide a pallet to be braked;
(b) at the end of the brake rocker (48) directed towards the entrance of the shelf channel (31, 31a-d) is provided a stop member (50) for the braked pallet;
(c) within the bearing bush (54) is located a spring element (55), which is compressed by the journal (53) when a pallet strikes against the stop member (50); and
(d) at the end of the brake rocker (48) directed away from the entrance of the shelf channel (31, 31a-d) is provided a control cam (52), through which the stop member (50) is brought upwards into the engagement position when the rear crossbeam (57) of a pallet slides over and beyond it.

37. Conveyor for conveying pallets and containers, characterized in that the conveyor has at least two parallel pallet support rails with corresponding pallet support chains (42a,b) according to one of the claims 1 to 22.

38. Pallet support rail for conveying pallets and containers, comprising
(a) a pallet support chain (2, 2a-d) in the form of a roller chain with a plurality of successively arranged, uniformly spaced support rollers (11);
(b) a running rail (4) on which roll the support rollers (11);
(c) a plurality of support straps (9), which are connected to the support rollers (11) and are displaceable on the running rail (4) by means of the support rollers (11); in which
(d) on the support rollers (11) are provided means for the lateral guidance of said support rollers (11);
(e) in the pallet support chain (2, 2a-d) the support rollers (11) are connected pairwise by side straps (13, 13a,b);
(f) at one end of the pallet support rail (1, 1a-d) is provided a chain reversal mechanism (20, 20a-d) which reverses the pallet support chain (2a, 2a-d) in the opposite direction and in this way divides it into an upper strand (OT) and a lower or reverse strand (UT) located beneath it; and
(g) the running rail (4) is part of a support profile (3);
characterized in that
(h) the support profile (3) is constructed below the running rail (4) as a substantially closed return channel (7), in which is received and guided the lower strand (UT) of the pallet support chain (2, 2a-d); and
(i) in the return channel (7), which is downwardly provided with a slot-like opening (19), the pallet support chain (2) is guided in such a way that the side straps (13a,b) rest on the edges of the opening (19) and can slide there in low-friction manner, whilst the support straps (9) hang freely in the opening (19).

39. Pallet support rail according to claim 38, characterized in that the support profile (3) is made from aluminium and the side straps (13, 13a,b) from a smooth plastic, preferably PTFE.

40. Pallet support rail according to one of the claims 38 and 39, characterized in that
(a) the width (B1) of the running rail (4) is smaller than the spacing (B2) of facing side straps (13a,b); and
(b) the side straps (13, 13a,b) project downwards to such an extent that they transfer lateral forces sideways from the outside to the running rail (4) and therefore laterally guide the pallet support chain (2, 2a-d).

## Revendications

1. Rail de support de palettes pour acheminer des palettes et des conteneurs, comprenant:
(a) une chaîne de support de palettes (2, 2a-d) sous forme d'une chaîne de rouleaux de support (11) également espacés et disposés les uns à la suite des autres;
(b) un rail de roulement (4) sur lequel les rouleaux de support roulent;
(c) une pluralité d'étriers de support (9) qui sont reliés aux rouleaux de support (11) et peuvent être déplacés sur le rail de roulement (4) par les rouleaux de support (11) ;
dans lequel
(e) des moyens sont prévus sur les rouleaux de support (11) pour le guidage latéral des rouleaux de support (11) ;
(f) les rouleaux de support (11) de la chaîne de support (2, 2a-d) sont reliés ensemble par paires par des étriers latéraux (13, 13a, b) et les étriers de support (9);
(g) les rouleaux de support (11) sont chacun montés de façon rotative sur une broche de chaîne (14), laquelle broche de chaîne (14) est reliée fermement aux étriers latéraux (13, 13a, b) d'une paire;
(h) un mécanisme de retour de chaîne (20, 20a-d) est prévu à l'extrémité du rail de support de palettes (1, 1a-d) qui inverse la direction de la chaîne de support de palettes (2, 2a-d) et qui divise ainsi la chaîne de support de palettes en un brin supérieur (OT) et en un brin inférieur ou de retour (UT) disposé directement au dessous;
(i) le rail de roulement (4) fait partie d'un profilé de support (3);
caractérisé en ce que
(k) le profilé de support (3) est formé sous forme d'un canal de retour principalement fermé (7) au-dessous du rail de roulement (4), canal de retour (7) dans lequel le brin inférieur (UT) de la chaîne de support de palettes (2, 2a-d) est reçu et guidé;
et
(l) dans le canal de retour (7) qui présente une ouverture (19) en forme de fente, dirigée vers le bas, la chaîne de support de palettes (2) est guidée de manière que les étriers latéraux (13a, b) reposent sur les bords de l'ouverture (19) et peuvent y glisser avec une friction réduite tandis que les étriers de support (9) s'accrochent librement dans l'ouverture (19).

2. Rail de support de palettes selon la revendication 1, caractérisé en ce que le profilé de support (3) est en aluminium et les étriers latéraux (13, 13a, b) en une matière plastique lisse, de préférence en PTFE.

3. Rail de support de palettes selon l'une des revendications 1 et 2, caractérisé en ce que les étriers de support (9) et étriers latéraux (13, 13a, b) sont disposés alternativement de manière que chaque étrier de support et une paire voisine d'étriers latéraux comprennent un rouleau de support en commun.

4. Rail de support de palettes selon la revendication 1, caractérisé en ce que
(a) le rail de roulement (4) est plus petit en largeur (B1) que l'espacement (B2) entre les deux étriers latéraux (13a, b) d'une paire; et
(b) les étriers latéraux (13, 13a, b) font saillie suffisamment loin vers le bas pour transférer les forces latérales vers le côté depuis l'extérieur sur le rail de roulement (4) et guider ainsi latéralement la chaîne de support de palettes (2, 2a-d).

5. Rail de support de palettes selon la revendication 1, caractérisé en ce que les rouleaux de support (11) sont réalisés sous forme de rouleaux à joues et comprennent une gorge de guidage circonférentielle(61) dans la région centrale, et en ce qu'un rail de guidage surélevé (60) est prévu sur le rail de roulement (4), le rail de guidage faisant saillie latéralement dans la gorge de guidage (61) et guidant latéralement le roulement de support (11).

6. Rail de support de palettes selon la revendication 1, caractérisé en ce que:
(a) les rouleaux de support (11) sont réalisés sous forme de rouleaux à joues et comprennent des joues de rouleaux (62a, b) à leurs extrémités;
(b) le rail de roulement (4) présente une largeur (B1) qui est plus petite que l'espacement (B3) entre les joues (62a, b) des rouleaux; et
(c) les joues (62a, b) des rouleaux font saillies suffisamment loin vers le bas pour qu'elles transfèrent les forces latérales vers le côté à partir de l'extérieur sur le rail de roulement (4) et guident ainsi latéralement la chaîne de support de palettes (2, 2a-d).

7. Rail de support de palettes selon la revendication 3, caractérisé en ce que les broches de chaîne (14) sont enfoncées à ajustage serré dans les étriers latéraux (13, 13a, b).

8. Rail de support de palettes selon la revendication 3, caractérisé en ce que les broches de chaîne (14) sont constituées sous forme de tiges filetées qui sont reliées par vissage aux étriers latéraux (13, 13a, b) en utilisant un manchon d'écartement (34) qui est disposé entre les étriers latéraux (13, 13a, b), les rouleaux de support (11) étant montés de façon rotative autour de manchons d'écartement respectifs (34).

9. Rail de support de palettes selon l'une des revendications 1 à 8, caractérisé en ce que les rouleaux de support (11) sont montés sur les broches de chaîne (14) ou sur les manchons d'écartement (34) au moyen de paliers à rouleaux (12).

10. Rail de support de palettes selon la revendication 1, caractérisé en ce que la hauteur (H1) du rail de support de palettes (1, 1a-d) avec le brin supérieur (OT) et le brin inférieur (UT), ne dépasse pas, du moins de façon significative, trois fois le diamètre des rouleaux de support (11) et/ou la moitié de la hauteur (H2) d'une europalette standard.

11. Rail de support de palettes selon la revendication 10, caractérisé en ce que le mécanisme de retour de chaîne (20, 20a-d) est construit de manière que la hauteur d'ensemble (H) soit maintenue même dans la région de changement de direction.

12. Rail de support de palettes selon la revendication 11, caractérisé en ce que les broches de chaîne (14) s'étendent axialement au-delà des étriers latéraux (13, 13a, b) et suffisamment loin pour qu'elles puissent servir d'éléments de transfert pour des roues dentées, et en ce que chaque mécanisme de retour de chaîne (20, 20a-d) comprend une roue de retour (21) à sept dents (22), dont le diamètre est choisi de manière que la chaîne de support de palettes (2, 2a-d) entraînée autour de la roue saute chaque fois une dent.

13. Rail de support de palettes selon la revendication 11, caractérisé en ce que le mécanisme de retour de chaîne (20, 20a-d) comprend un élément de retour (23) avec une partie de support courbe et rigide, sur laquelle partie courbe passent les rouleaux de support (11) de la chaîne de support de palettes (2, 2a-d) pendant le changement de direction.

14. Rail de support de palettes selon la revendication 11, caractérisé en ce que le mécanisme de retour de chaîne (20, 20a-d) comprend un élément de renvoi (24) avec une partie de support courbe montée de façon élastique, partie de support courbe sur laquelle passent les rouleaux de support (11) de la chaîne de support de palettes (2, 2a-d) pendant le changement de direction.

15. Rail de support de palettes selon la revendication 14, caractérisé en ce que l'élément de renvoi (24) comprenant la partie de support courbe montée de façon élastique est construit sous la forme d'un bossage monté de façon élastique avec un anneau interne (27), un anneau intermédiaire élastique (26) et un anneau externe (25).

16. Rail de support de palettes selon l'une des revendications 1 à 15, caractérisé en ce que le rail de roulement (4) est entouré latéralement par une surface de support (6) située plus bas et en ce que les étriers latéraux de guidage (13, 13a, b) font saillie vers le bas suffisamment loin pour qu'ils ne soient que légèrement situés au-dessus de la surface de support (6) et viennent en contact de support avec la surface de support (6) quand il y a un quelconque basculement de la chaîne de support de palettes (2, 2a-d).

17. Rail de support de palettes selon l'une des revendications 1 à 16, caractérisé en ce que les étriers de support (9) ont un profil en U et comprennent sur leur côté supérieur un nervure (10) et/ou une cannelure (35) pour la fixation de palettes ou conteneurs transportés.

18. Rail de support de palettes selon l'une des revendications 1 à 17, caractérisé en ce que les étriers latéraux (13, 13a, b) ont un profil en forme de crémaillère dentée sur leur côté inférieur de manière que le brin supérieur (OT) et le brin inférieur (UT) puissent être reliés l'un à l'autre pour transférer le mouvement.

19. Rail de support de palettes selon l'une des revendications 1 à 18, caractérisé en ce que pour faciliter l'assemblage de la chaîne de support de palettes (2, 2a-d) sont prévues des fentes (36) destinées aux broches de chaînes (14), ouvertes vers le bas et dirigées en oblique vers l'intérieur dans les étriers de support (9), de manière que les broches de chaîne (14) puissent être poussées en place par un mouvement latéral.

20. Rail de support de palettes selon l'une des revendications 1 à 19, caractérisé en ce que le brin supérieur et le brin inférieur (OT, UT) constituent ensemble un convoyeur en circulation, qui est entraîné à l'autre extrémité du rail des supports de palettes (1, la-d) par un mécanisme de retour vers l'arrière (32a-d), et en ce que seulement environ la moitié du convoyeur de circulation est construite sous forme d'une chaîne de support de palettes (2, 2a-d), alors que l'autre moitié du convoyeur est constituée par un moyen de traction, qui relie les extrémités de la chaîne de support de palettes (2, 2a-d) pour transférer les forces de traction.

21. Rail de support de palettes selon la revendication 20, caractérisé en ce que le moyen de traction comprend une courroie ou un câble de retour (33a, d) qui est entraîné autour d'un rouleau de renvoi (41) du mécanisme de retour vers l'arrière (32a-d).

22. Rail de support de palettes selon la revendication 21, caractérisé en ce que la courroie ou le câble de retour (33a, d) est un élastique et sert d'élément tendeur pour la chaîne de support de palettes (2, 2a-d).

23. Rail de support de palettes selon l'une des revendications 20 à 22, caractérisé en ce qu'il est prévu, à l'emplacement de la liaison entre les moyens de traction et pour la chaîne de support de palettes (2, 2a-d) dans le brin supérieur (OT), une brosse (39) qui nettoie la surface supérieure du rail de roulement (4) à chaque mouvement vers l'avant et vers l'arrière de la chaîne de support de palettes (2, 2a-d).

24. Rail de support de palettes selon l'une des revendications 1 à 23, caractérisé en ce qu'un câble élastique (37) est prévu entre le rail de support de palettes (1, 1a-d) et la chaîne, lequel câble élastique (37) est à un faible niveau de tension quand la chaîne de support de palettes (2, 2a-d) est disposée sur le brin inférieur (UT), et développe une tension de retour qui augmente graduellement à mesure que la chaîne de support de palettes (2, 2a-d) se retire du brin inférieur (UT) pour passer dans le brin supérieur (OT).

25. Rail de support de palettes selon la revendication 9, caractérisé en ce qu'il est prévu latéralement dans le profil de support (3) une gorge de fixation (8) pour recevoir des moyens de montage en particulier sous la forme d'attaches à tête de marteau(16).

26. Unité de stockage à glissière pour stocker des palettes et des conteneurs, l'unité de stockage à glissière (28) comprenant une pluralité de canaux faisant rayonnages (31, 31a-d) adjacents et disposés latéralement et/ou les uns au-dessus des autres, avec une pluralité d'espaces à palettes disposés les uns derrière les autres pour le stockage et le retrait successifs d'une pluralité de palettes et de conteneurs à partir d'un côté du rayonnage, caractérisée en ce que pour le transport de palettes ou conteneurs sont prévus dans chaque canal formant rayonnage (31, 31a-d) au moins deux rails de support de palettes (2, 2a-d) disposés en parallèle avec des chaînes de support de palettes correspondantes (42, 42a-d) selon l'une des revendication 1 à 25, et en ce que les rails de support de palettes (2, 2a-d) s'étendent chacun intégralement sur plusieurs espaces à palettes, et de préférence sur la totalité de la longueur du canal formant rayonnage (31, 31a-d).

27. Unité de stockage à glissière selon la revendication 26, caractérisée en ce que
les rails de support de palettes (2, 2a-d) sont construits avec une légère inclinaison, de préférence égale ou inférieure à 2%, et en particulier d'environ 1%, inclinée vers la sortie du rayonnage.

28. Unité de stockage à glissière selon la revendication 26 ou 27, caractérisée en ce que des moyens sont prévus pour assurer la parcours en tandem des chaînes de support de palettes (42a, b)dans chaque canal formant rayonnage (31, 31a-d).

29. Unité de stockage à glissière selon la revendication 28, caractérisée en ce que dans chacun des rails de support de palettes (2, 2a-d), le brin supérieur (OT) et le brin inférieur (UT) forment ensemble un convoyeur à boucle fermée, qui est entraîné à l'autre extrémité du rail de support de palettes (1, 1a-d) par un mécanisme de retour vers l'arrière(32a-d); en ce que seule environ la moitié de la longueur de la boucle fermée est formée sous forme d'une chaîne de support de palettes (2, 2a-d), alors que l'autre moitié consiste en un moyen de traction qui est relié aux extrémités de la chaîne de support de palettes (2, 2a-d) pour transférer les forces de traction; en ce que le moyen de traction comprend une courroie ou un câble de retour (43a, b) qui est entraîné sur un rouleau de renvoi (44a-b) du mécanisme de retour vers l'arrière (32a-d); en ce que les moyens pour assurer le mouvement en tandem comprennent un axe (45) qui relie l'un à l'autre les rouleaux de renvoi (44a, b) de chaque canal formant rayonnage (31, 31a-d).

30. Unité de stockage à glissière selon la revendication 28, caractérisée en ce que les moyens pour assurer le déplacement en tandem comprennent un guide de rouleaux (58) situé entre les chaînes de support de palettes (42a, b) de chaque canal formant rayonnage (31, 31a-d), le guide de rouleaux étant relié fermement aux chaînes de support de palettes (42a, b) correspondantes du canal formant rayonnage.

31. Unité de stockage à glissière selon la revendication 28, caractérisée en ce que dans chacun des rails de support de palettes (2, 2a-d), le brin supérieur (OT) et le brin inférieur (UT) forment ensemble une boucle de circulation qui est entraînée à l'autre extrémité du rail de support de palettes (1, 1a-d) autour d'un mécanisme de retour vers l'arrière (31a-d); en ce que seule environ la moitié de la longueur de la boucle de circulation est formée sous forme d'une chaîne de support de palettes (42a-b), alors que l'autre moitié de la boucle constitue un moyen de traction qui relie ensemble les extrémités de la chaîne de support de palettes (42a-b) pour transférer les forces de traction; en ce que le moyen de traction est constitué par une courroie ou un câble de retour (43a, b)qui est entraîné autour d'un rouleau de renvoi (44a-b) du mécanisme de retour vers l'arrière (32a-d); et en ce que, pour assurer le mouvement en tandem, les courroies ou câbles de retour (43a, b) sont croisés, chacun comprenant une extrémité
reliée à l'extrémité de l'autre chaîne de support de palettes.

32. Unité de stockage à glissière selon l'une des revendications 26 à 31, caractérisée en ce que sont prévus sur au moins un rail de support de palettes (1, 1a-d) de chaque canal formant rayonnage (31, 31a-d) des moyens pour déterminer la position de la chaîne de support de palettes respective (2, 2a-d, 42a, b).

33. Unité de stockage à glissière selon la revendication 32, caractérisée en ce que les moyens de détermination comprennent un codage optique d'éléments et/ou de segments individuels de la chaîne de support de palettes (2, 2a-d, 42a-b), utilisant en particulier des couleurs ou plaques d'identification attachées.

34. Unité de stockage à glissière selon la revendication 32, caractérisée en ce que les moyens de détermination comprennent un dispositif de contrôle (40) qui détecte automatiquement des éléments et/ou segments individuels de la chaîne de support de palettes (2, 2a-d, 42a, b) par lesquels il détermine la position de la chaîne, et la transmet à l'affichage.

35. Unité de stockage à glissière selon l'une des revendications 26 à 34, caractérisée en ce qu'il est prévu, à l'entrée de chaque canal formant rayonnage (31, 31a-d), un dispositif de freinage qui freine automatiquement une palette qui roule le long de la chaîne de support de palettes (2, 2a-d) du canal dans la direction de l'entrée, et arrête la palette contre une butée.

36. Unité de stockage à glissière selon la revendication 35, caractérisée en ce que:
(a) le dispositif de freinage comprend un bras basculant (48) s'étendant dans la direction du canal formant rayonnage (31, 31a-d), le bras basculant étant monté coulissant en sens longitudinal au moyen d'un coussinet (54) en forme de fente longitudinale dans un tourillon fixe (53), le bras basculant étant tel qu'une palette à freiner peut glisser sur lui ;
(b) une butée (50) pour la palette à freiner est prévue à l'extrémité du bras basculant (48) qui s'étend en direction de l'entrée du canal formant rayonnage (31, 31a-d) ;
(c) un élément à ressort (55) est prévu dans le coussinet (54), l'élément à ressort étant comprimé par le tourillon (53) quand une palette vient heurter la butée (50) ; et
(d) une came (52) est prévue à l'extrémité du bras basculant (48) qui est éloignée de l'entrée dans le canal formant rayonnage (31, 31a-d), la came amenant la butée (50) à se déplacer vers le haut et à venir en position opérationnelle quand l'entretoise arrière (57) d'une palette glisse sur la came.

37. Piste de transport pour l'acheminement de palettes et de conteneurs, caractérisée en ce que la piste de transport comprend au moins deux rails de support de palettes disposés parallèlement, avec des chaînes de support de palettes correspondantes (42a, b) selon l'une des revendications 1 à 22.

38. Rail de support de palettes pour acheminer des palettes et des conteneurs, comprenant:
(a) une chaîne de support de palettes (2, 2a-d) sous forme d'une chaîne de rouleaux de support (11) également espacés et disposés les uns à la suite des autres;
(b) un rail de roulement (4) sur lequel les rouleaux de support roulent;
(c) une pluralité d'étriers de support (9) qui sont reliés aux rouleaux de support (11) et peuvent être déplacés sur le rail de roulement (4) par les rouleaux de support (11) ;
dans lequel
(d) des moyens sont prévus sur les rouleaux de support (11) pour le guidage latéral des rouleaux de support (11) ;
(e) des étriers latéraux (13, 13a, b) sont disposés sur les deux côtés de la chaîne de support de palettes (2, 2a-d) ;
(f) un mécanisme de retour de chaîne (20, 20a-d) est prévu à l'extrémité du rail de support de palettes (1, la-d) qui inverse la direction de la chaîne de support de palettes (2, 2a-d) et qui divise ainsi la chaîne de support de palettes en un brin supérieur (OT) et en un brin inférieur ou de retour (UT) disposé au-dessous;
(g) le rail de roulement (4) fait partie d'un profilé de support (3) ;
caractérisé en ce que
(h) le profilé de support (3) est formé sous forme d'un canal de retour principalement fermé (7) au-dessous du rail de roulement (4), canal de retour (7) dans lequel le brin inférieur (UT) de la chaîne de support de palettes (2, 2a-d) est reçu et guidé ; et
(i) dans le canal de retour (7) qui présente une ouverture (19) en forme de fente, dirigée vers le bas, la chaîne de support de palettes (2) est guidée de manière que les étriers latéraux (13a, b) reposent sur les bords de l'ouverture (19) et peuvent y glisser avec une friction réduite tandis que les étriers de support (9) s'accrochent librement dans l'ouverture (19).

39. Rail de support de palettes selon la revendication 38, caractérisé en ce que le profilé de support (3) est en aluminium et les étriers latéraux (13, 13a, b) en une matière plastique lisse, de préférence en PTFE.

40. Rail de support de palettes selon l'une des revendications 38 et 39, caractérisé en ce que
(a) la largeur (B1) du rail de roulement (4) est choisie inférieure à la distance (B) d'étriers latéraux (13a, b) opposés ; et
(b) les étriers latéraux (13, 13a, b) font saillie suffisamment loin vers le bas pour transférer les forces latérales vers le côté depuis l'extérieur sur le rail de roulement (4) et guider ainsi latéralement la chaîne de support de palettes (2, 2a-d).
